# EUROPEAN PATENT SPECIFICATION

(11) **EP 2 902 895 B1**
(45) Date of publication and mention of the grant of the patent: **13.03.2019**
(21) Application number: 13840364.7
(22) Date of filing: 26.09.2013
(51) Int. Cl.: H04M 1/725

(54) **INFORMATION PROCESSING DEVICE, POSTING SYSTEM, DISPLAY CONTROL METHOD, AND PROGRAM**
INFORMATIONSVERARBEITUNGSVORRICHTUNG, BUCHUNGSSYSTEM, ANZEIGESTEUERUNGSVERFAHREN UND PROGRAMM
DISPOSITIF DE TRAITEMENT D'INFORMATIONS, SYSTÈME DE PUBLICATION, PROCÉDÉ DE COMMANDE D'AFFICHAGE, ET PROGRAMME ASSOCIÉ

(30) Priority: 26.09.2012 JP 2012212876
(43) Date of publication of application: 05.08.2015
(73) Proprietor: NEC Corporation, Tokyo 108-8001 (JP)
(72) Inventor: ITAMOTO Shinichi, Kawasaki-shi Kanagawa 211-8666 (JP)
(74) Representative: Vossius & Partner Patentanwälte Rechtsanwälte mbB
(86) International application number: PCT/JP2013/075998
(87) International publication number: WO 2014/050937

(56) References cited:
- EP-A1- 2 456 225
- EP-A2- 1 850 587
- WO-A1-2011/018873
- WO-A2-2012/027594
- JP-A- H1 084 554
- JP-A- 2011 130 279

## Description

### TECHNICAL FIELD

The present invention relates to an information processing device, a posting system, a display control method, and a program.

### BACKGROUND ART

In recent years, mobile terminals such as smartphones and tablet type terminals have become widespread. As one type of mobile terminal, there is a mobile terminal in which a function of receiving broadcasting waves of a television or a function of establishing an Internet connection is provided. A user can browse or view content such as a television broadcast, music, or the like using such a mobile terminal. The user posts an image or text data using a social networking service such as Twitter (registered trademark) or Facebook (registered trademark) using the mobile terminal in order to share the latest status on the WEB or his or her current thoughts.

For example, a computer disclosed in Patent Document 1 receives a broadcast signal of a selected channel when a broadcast channel is selected, performs tuning, demodulation, and the like on the received broadcast signal, and displays content such as a video signal and an audio signal on the display unit. Further, the computer accesses a bulletin board service allocated to the selected channel to acquire a new arrival posting and display the acquired new arrival posting on the display unit.

Patent Document 1:
JP-2006-053729 A

WO 2012/027594 A2 relates to a method for augmenting a digital on-screen graphic, wherein a digital on-screen graphic is identified within a multimedia stream for an electronic display.

### SUMMARY OF THE INVENTION

### Problem to be Solved by the Invention

However, when the content and the posting are displayed on the same screen, one display form may interfere with another display form and it may be difficult to view the other display form if the display forms of the content and the posting are different.

An exemplary object of the present invention is to provide an information processing device, a posting system, a display control method, and a program capable of solving the above-described problem.

### Means for Solving the Problem

An information processing device according to claim 1 includes: a display unit that includes a content display region and a posting information display region provided on the same screen, the display unit displaying content on the content display region and displaying posting information posted on a network on the posting information display region; and a control unit that executes at least one of first display control and second display control, the first display control controlling a display form of the posting information according to the content displayed on the display unit, the second display control controlling a display form of the content according to the posting information displayed on the display unit, whereby the control unit is adapted not to display a communication icon in a horizontal display state in which only content display is performed and is adapted to display the communication icon in a vertical display state in which two regions of content display and posting information display are provided, the communication icon representing a communication state of receiving the posting information.

A posting system according to claim 7 includes: the above-described information processing device; and a posting information management server that associates posting time information with the posting information and manages the posting time information and the posting information, the posting time information representing a time at which the posting information was posted from the information processing device.

A method according to claim 8 for controlling a display of a display unit including a content display region and a posting information display region provided on the same screen, includes: displaying content on the content display region; displaying posting information posted on a network on the posting information display region; and executing at least one of first display control and a second display control, the first display control controlling a display form of the posting information according to the content displayed on the display unit, the second display control controlling a display form of the content according to the posting information displayed on the display unit, whereby executing the at least one of the first display control and the second display control includes not to display a communication icon in a horizontal display state in which only content display is performed and displaying the communication icon in a vertical display state in which two regions of content display and posting information display are provided, the communication icon representing a communication state of receiving the posting information.

A computer program according to claim 9 comprises instructions that, when executed by the control unit of the information processing device, carry out the above method. Further advantageous features are defined in dependent claims 2 to 7.

### Effect of the Invention

According to an exemplary embodiment of the present invention, it is possible to make easy to view by matching a display form of content and a display form of posting information even when the content and the posting information are displayed on the same screen.

### BRIEF DESCRIPTION OF THE DRAWINGS

FIG. 1 is a diagram showing an outline of a posting system according to a first exemplary embodiment of the present invention.
FIG. 2 is a sequence diagram showing the outline of the posting system according to the first exemplary embodiment of the present invention.
FIG. 3 is a diagram showing an example of a screen on which content and posting information are simultaneously displayed in the posting system according to the first exemplary embodiment of the present invention.
FIG. 4A is a diagram showing an example of the screen in the posting system according to the first exemplary embodiment of the present invention.
FIG. 4B is a diagram showing an example of the screen in the posting system according to the first exemplary embodiment of the present invention.
FIG. 4C is a diagram showing an example of the screen in the posting system according to the first exemplary embodiment of the present invention.
FIG. 5 is a block diagram showing an example of basic constituent elements of a mobile terminal according to the first exemplary embodiment of the present invention.
FIG. 6 is a reference diagram showing an example of first display control by a display control unit according to the first exemplary embodiment of the present invention.
FIG. 7 is a reference diagram showing an example of second display control by the display control unit according to the first exemplary embodiment of the present invention.
FIG. 8 is a diagram showing an example of a configuration of a content distribution server according to the first exemplary embodiment of the present invention.
FIG. 9 is a diagram showing an example of a content data table according to the first exemplary embodiment of the present invention.
FIG. 10 is a diagram showing an example of a configuration of a posting information management server according to the first exemplary embodiment of the present invention.
FIG. 11 is a diagram showing an example of a posting information table according to the first exemplary embodiment of the present invention.
FIG. 12 is a diagram showing an example of a configuration of a posting analysis server according to the first exemplary embodiment of the present invention.
FIG. 13 is a diagram showing an example of a posting status analysis result table according to the first exemplary embodiment of the present invention.
FIG. 14 is a flowchart showing an example of a posting information display method according to the first exemplary embodiment of the present invention.
FIG. 15 is a flowchart showing an example of a display control method according to the first exemplary embodiment of the present invention.
FIG. 16A is an explanatory diagram showing an example in which content according to a posting status is reproduced in the posting system according to the first exemplary embodiment of the present invention.
FIG. 16B is an explanatory diagram showing an example in which content according to a posting status is reproduced in the posting system according to the first exemplary embodiment of the present invention.
FIG. 17A is an explanatory diagram showing an example in which the posting status is displayed in the posting system according to the first exemplary embodiment of the present invention.
FIG. 17B is an explanatory diagram showing an example in which the posting status is displayed in the posting system according to the first exemplary embodiment of the present invention.
FIG. 18 is a diagram showing an example of a constituent element of a posting analysis server according to a second exemplary embodiment of the present invention.
FIG. 19 is a diagram showing an example of a content associated hashtag table according to the second exemplary embodiment of the present invention.
FIG. 20 shows an example of a hashtag table according to the second exemplary embodiment of the present invention.
FIG. 21 shows an example of the information processing method according to the second exemplary embodiment of the present invention.

### EMBODIMENTS FOR CARRYING OUT THE INVENTION

### [First Exemplary Embodiment]

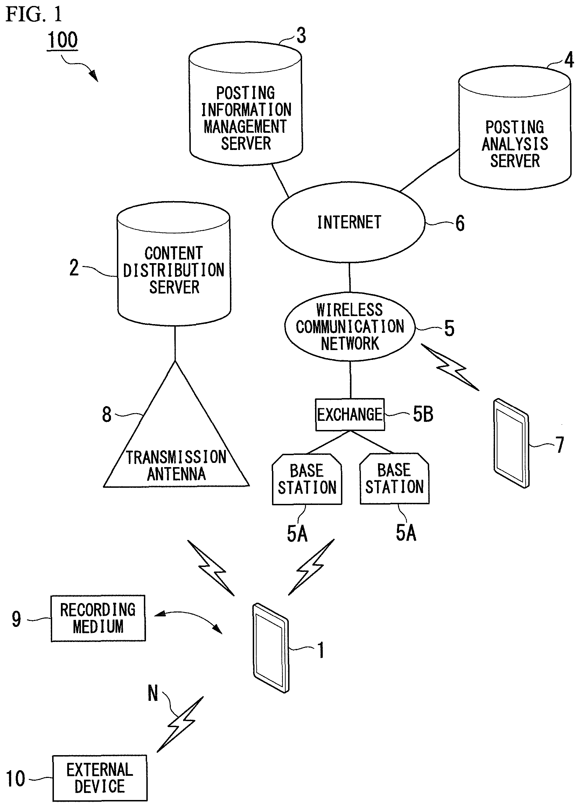

Hereinafter, exemplary embodiments of the present invention will be described with reference to the drawings. FIG. 1 is a diagram showing an outline of a posting system 100 according to a first exemplary embodiment of the present invention.

This posting system 100 is a system which provides a service for notifying a predetermined opposite party of a posting status when the posting status is analyzed and a predetermined notification condition is satisfied. This posting system 100 mainly includes a mobile terminal 1, a content distribution server 2, a posting information management server 3, and a posting analysis server 4.

The content distribution server 2 is a server for distributing content which is viewing information for a viewer. The content distribution server 2, for example, may include a database which stores content data of program content provided by a television station. The content distribution server 2 distributes its own stored content data to the mobile terminal 1 or the like at a predetermined timing.

In this exemplary embodiment, the content distribution server 2 adopts two types of distribution methods. The first distribution method is a method of distributing broadcasting data to be broadcast based on a predetermined time table. The second distribution method is a method of distributing viewable content to be transmitted to a request source in response to a request of a viewer. Content data to be distributed in the distribution methods is the same and is stored in a memory unit within the content distribution server 2.

When the method of distributing the content data of the broadcasting content is executed, the content distribution server 2 can broadcast the content data of a plurality of pieces of content simultaneously to a large number of participation terminals. Consequently, when the mobile terminal 1 joins a distribution service of broadcasting content or when the mobile terminal 1 is a terminal which is permitted to provide the service, the mobile terminal 1 can receive the content data of the broadcasting content designated by the user and reproduce the data. Accordingly, the user can reproduce the data in the mobile terminal 1 by acquiring only content data of content designated from among a plurality of pieces of the content broadcast at a designated time by designating a channel or the like.

When the distribution method of distributing the content data of the viewable content is executed, the content distribution server 2 distributes the content data of the viewable content in response to a request to the terminal transmitting the distribution request for requesting the viewable content. More specifically, the content distribution server 2 receives a distribution request for requesting the distribution of the viewable content along with terminal identification information (hereinafter referred to as a terminal ID) for identifying each terminal from participation terminals and the like and content associated information associated with viewable content. When the information has been received, the content distribution server 2 distributes content data of the viewable content indicated by content associated information to a terminal (a terminal indicated by the terminal ID) of a request source of a distribution request. The terminal which is the request source of the distribution request receives the content data of the viewable content from the content distribution server 2 and reproduces the data.

The content associated information is information related to the content. In the content associated information, for example, a television station name indicating details of the content, a character string indicating a program name, and information indicating a hashtag and the like may be included. In the content associated information, the details of the content, a character string or a hashtag indicating a keyword related to a performer or the content details or the like, and information indicating a broadcasting time slot or a distribution time slot of the content or the like may be included.

The hashtag is classification information to be used in Twitter (registered trademark). When posting information including the hashtag has been posted, the posting information including the hashtag can be distinguished from other posting information which does not include the hashtag. The hashtag is used as a search key when only the posting information including a certain hashtag is searched for from among a plurality of pieces of the posting information. A search in which the hashtag is designated as the search key is beneficial when a user has an active intention to post related information indicated by the hashtag. For example, when the keyword included in the posting information is used, it is also possible to search for the posting information related to the keyword. However, it is difficult to search for the posting information when a character string including the keyword is not posted in the posting information. Thus, when no hashtag is used, posting in a free character string is impeded. In addition, when a document to be posted and a keyword are both written, there is a possibility of understanding of the document content to be posted being impeded. Thus, as a method of associating posting information without using a keyword, a hashtag is used. This hashtag is information in which a number sign "#" is added to the beginning of the character string obtained by writing the keyword in letters, kanji, hiragana, katakana, or the like. As a format of the hashtag, a space is input immediately before the number sign and immediately after the character string. In addition, the format of the hashtag can be freely determined by the user. Consequently, the character string serving as the keyword can be determined by the user or may be generated by a certain user.

The posting information management server 3 includes a database which stores posting information posted on the WEB (World Wide Web (WWW)). The posting information management server 3 provides the posting information to the mobile terminal 1 and the like. The posting information management server 3, for example, may provide a posting WEB service for browsing the posting information posted on the WEB, creating the posting information, and posting the created posting information on the WEB.

More specifically, the posting information management server 3 gathers the posting information of a service subscriber joining the posting WEB service and transmits posting information of a request target to a terminal possessed by the service subscriber if there is a browsing request from the service subscriber.

When the posting information has been acquired from the mobile terminal 1, the posting information management server 3 associates the posting time information with the posting information and stores the information in its own memory unit. When the content associated information for specifying content data distributed from the content distribution server 2 is included in the posting information, the posting information management server 3 associates the content associated information with each of the posting information and the posting time information and stores the information in its own memory unit. The posting information management server 3 may receive the posting information with which the content associated information is not associated in some cases. In this case, the posting information management server 3 associates the posting time information with the posting information and stores the information in its own memory unit.

The posting time information is information indicating a posting time or a period at or in which a posting time has been posted. The posting time information, for example, may indicate when the posting information management server 3 has received the posting information or may be information indicating a transmission time of the mobile terminal 1 or the like transmitting the posting information. In addition, the posting time information may be information indicating a posting timing for the content. The posting time information, for example, may be information (hereinafter referred to as content time information) indicating a reproduction position of broadcasting content broadcast when the posting information has been posted. The posting time information may be information (hereinafter referred to as content time information) indicating a reproduction position of viewable content reproduced in the mobile terminal 1 when the posting information has been posted.

The posting analysis server 4 receives the posting information stored in the database of the posting information management server 3 and analyzes a posting status of the posting information based on the received posting information. The posting analysis server 4 notifies the mobile terminal 1 of the posting status according to the posting status. More specifically, the posting analysis server 4 determines whether the posting status satisfies a notification condition specified in advance. When it is determined that the posting status has satisfied the notification condition, the posting analysis server 4 notifies the mobile terminal 1 of the posting status.

The posting analysis server 4, for example, may particularly analyze a change in the number of postings per unit time of the posting information associated with the content associated information among the posting information posted to the posting information management server 3.

The posting analysis server 4 is configured to transmit the analyzed posting status (analysis result) to a subscriber terminal of a posting status notification service in the case where the notification condition has been satisfied. An example of the notification condition is the case in which the number of postings per unit time has exceeded a specified threshold value.

In the following description, it is assumed that the subscriber terminal of the posting status notification service is a terminal possessed by the subscriber of the posting service and is a terminal capable of viewing distributed content from the content distribution server 2.

A type of posting information to be posted to the posting information management server 3 differs depending on a posting method of posting information or posting content. In this exemplary embodiment, the type of posting information includes a "like posting" and a "write posting." The "like posting" is posting information indicating agreement or a positive opinion. The "like posting" is posted by a simple operation such as button pressing. The "write posting" is posting information for posting character information or image information selected by the user. The "write posting" includes information transmitted by the user and is mainly constituted of text.

This posting analysis server 4 can analyze the posting status indicating whether the content is trending based on the posting information posted in association with the content. For example, it can be determined that the posting status for the content is that it is trending when the number of postings per unit time is larger. In contrast, when the number of postings is small, it can be determined that the posting status for the content is that it is not trending.

In FIG. 1, when the mobile terminal 1 is connected to a wireless communication network (mobile communication network) 5 via a closest base station 5A and an exchange 5B, the mobile terminal 1 is in a state in which phone call communication with another mobile terminal 7 via the wireless communication network 5 is possible. When the mobile terminal 1 is connected to the Internet 6 via the wireless communication network 5, browsing is enabled by accessing a website. The mobile terminal 1 can also perform a streaming process of downloading and reproducing multimedia content data such as a moving image, a still image, music, news, and music from the content distribution server 2 via the Internet 6 and the wireless communication network 5.

The mobile terminal 1 acquires content data provided by a television station by receiving content data of a terrestrial digital broadcast transmitted from the content distribution server 2 via a transmission antenna 8. The mobile terminal 1 can also download and receive a digital broadcast from the content distribution server 2 via the wireless communication network 5 and the Internet 6 as in Internet radio. In this manner, the mobile terminal 1 can receive the content data of the broadcasting content via a television function or the like or download streaming content data via an Internet connection function. The mobile terminal 1 can acquire various types of content from recording media 9 such as a detachable portable memory card. In addition, the mobile terminal 1 can acquire various types of content from the external device 10 via near field communication (reference symbol N in FIG. 1) such as Bluetooth (registered trademark) communication or infrared communication.

In this exemplary embodiment, an example in which the mobile terminal 1 is applied as the information processing device will be described. However, the exemplary embodiment of the present invention is not limited thereto. The information processing device may be a smartphone, a portable game device, a personal digital assistant (PDA), a tablet type personal computer (PC), a note type PC, or the like.

The mobile terminal 1, for example, may include a phone call function, an e-mail function, an Internet connection function (Web access function), a television function through which a digital television broadcast (for example, a one-segment terrestrial digital television broadcast) can be received and viewed, or a video recording function. The video recording function is a function of performing video recording (including audio recording; the same applies hereinafter) on content received in a television broadcast or the like. The video recording function is not limited to a function of performing the video recording, and also includes a content recording function of performing audio recording.

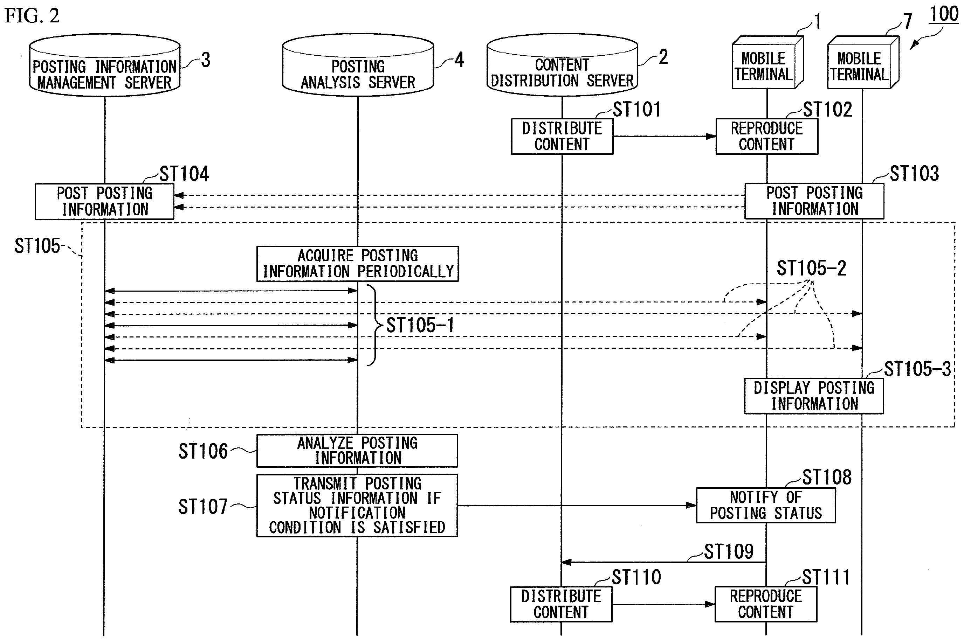

Next, an outline of the posting system 100 according to this exemplary embodiment will be described with reference to FIG. 2. FIG. 2 is a sequence diagram showing the outline of the posting system 100 according to this exemplary embodiment. Here, for example, a distribution method in which the content distribution server 2 distributes broadcasting content will be described.

### (Step ST101)

The content distribution server 2, for example, reads content data of terrestrial digital broadcasting content stored in its own memory unit when a current time has reached a broadcasting time slot and transmits data via the transmission antenna 8.

### (Step ST102)

The mobile terminal 1 receives and reproduces content data of the broadcasting content and outputs a video or audio from its own display or speaker.

### (Step ST103)

Next, the case in which posting information has been posted from the mobile terminal 1 or 7 which reproduces content will be described. In this case, the mobile terminals 1 and 7 transmit information obtained by associating a poster ID indicating a poster with the posting information to the posting information management server 3. The poster ID may be a terminal ID allocated to each terminal.

The mobile terminal 1 may transmit posting information including content associated information about the reproduced content to the posting information management server 3. The mobile terminal 1, for example, may transmit posting information including information indicating a channel number of broadcasting content currently being reproduced as content associated information to the posting information management server 3. The content associated information is all information related to the content.

Further, the mobile terminal 1 may assign content identification information for identifying content which is being reproduced to the posting information and transmit the information to the posting information management server 3. The content identification information is a content name, an identification (ID), or the like which is information for identifying certain content and other content.

### (Step ST104)

The posting information management server 3, for example, acquires a reception time of posting information as a posting time, associates posting time information representing a posting time and the received posting information and poster ID, and registers the information in its own memory unit.

At this time, the posting information management server 3 determines a type of received posting information. For example, the posting information management server 3 may determine whether the received posting information is the "like posting" or the "write posting." The posting information management server 3 associates information indicating the determined type of posting information with the posting information and registers the information in its own memory unit.

In addition, the posting information management server 3 determines whether the content associated information is included in the received posting information. When it is determined that the content associated information is included, the posting information management server 3 associates the content associated information with the posting information and registers the information in its own memory unit.

For example, it is assumed that a character string or a hashtag indicating a television station name or a program name is included within the posting information. In this case, the posting information management server 3 determines that content corresponding to a television station name or a program name included in the posting information among content broadcast at a current time is content related to the posting information. Further, the posting information management server 3 acquires content associated information indicating content determined to be related content.

In addition, the posting information management server 3 determines whether a character string or a hashtag indicating information included in content-accompanying information (for example, a document for describing details of the content, a performer, a related keyword, or the like) broadcast at a current time is included in the posting information. When the information included in the content-accompanying information is included in the posting information, the posting information management server 3 determines that the content is content associated to the posting information. Further, the posting information management server 3 acquires the content associated information indicating the determined content. A content attribute information, for example, may be text data associated with terrestrial digital broadcasting content. The content-accompanying information to be displayed on an electronic program table is generally associated with the terrestrial digital broadcasting content.

When the content identification information is included in the received posting information, the posting information management server 3 associates the content identification information with the posting information and registers the information in its own memory unit.

### (Step ST105)

The posting analysis server 4 periodically acquires the posting information from the posting information management server 3 (step ST105-1).

For example, every time a time specified in advance has elapsed, the posting analysis server 4 transmits a request command for requesting the transmission of updated posting information to the posting information management server 3. The posting analysis server 4, for example, may request the transmission of posting information posted within the last 10 minutes among the posting information registered in the posting information management server 3. The posting analysis server 4 may request the transmission of the posting information associated with content associated information specified in advance among the posting information posted within the last 10 minutes for every piece of content. The posting analysis server 4 may request the transmission of the posting information posted from a specific poster for every piece of attribute information of a poster.

When this request command is received, the posting information management server 3 reads posting information corresponding to the request of the posting analysis server 4 from its own memory unit and transmits the posting information to the posting analysis server 4. The posting information management server 3 acquires the posting information posted within the last 10 minutes based on the posting time information associated with the posting information and transmits the posting information to the posting analysis server 4.

Thereby, when the posting information has been posted from the mobile terminals 1 and 7 and the like, the posting information can be registered in the posting information management server 3 and the posting analysis server 4 can acquire the posting information updated by the posting information management server 3.

Like the posting analysis server 4, the mobile terminals 1 and 7 can transmit a request command for requesting the transmission of the posting information to the posting information management server 3. The posting information management server 3 transmits the posting information corresponding to the request command to the mobile terminals 1 and 7 (step ST105-2). When the posting information is received from the posting information management server 3, the mobile terminals 1 and 7 display the received posting information on their own displays (step ST105-3).

When the posting information is received, these mobile terminals 1 and 7 cause the content and the posting information to be displayed on the same screen. Here, the mobile terminals 1 and 7 execute at least one of first display control and second display control. In the first display control, a display form of the posting information is controlled depending on content to be displayed. In the second display control, the display form of the content is controlled depending on the posting information to be displayed. Details of the first and second display controls will be described later.

### (Step ST106)

The posting analysis server 4 analyzes a posting status based on the posting information received from the posting information management server 3. The posting analysis server 4 determines whether the analyzed posting status (analysis result) satisfies a notification condition specified in advance.

The posting status represents a status in which the posting information is posted from the mobile terminal 1 or 7 or the like. The posting status may indicate, for example, whether there is a state in which the posting is trending (a state in which the posting is becoming more active). The state in which the posting is trending refers to a case in which the number of postings of the posting information is large, a case in which the number of postings of the posting information has rapidly increased, or the like. A determination criterion for determining whether the number of postings is large or increases may be relative evaluation within a plurality of pieces of content during broadcasting or absolute evaluation compared to a threshold value specified in advance.

The notification condition is a predetermined condition as a condition when the user is notified of the posting status. For example, when it is determined that the posting status is that the posting is trending among broadcasting content currently being broadcast, providing the notification of the posting status of the content of which the posting status is determined to be that the posting is trending may be specified as a notification condition.

### (Step ST107)

When the posting status satisfies the notification condition, the posting analysis server 4 transmits posting status information indicating the posting status to the mobile terminal 1. The posting analysis server 4 transmits information obtained by associating content associated information (for example, a channel number) of content with information indicating the posting status of the content of which the posting status is determined to be that the posting is trending as the posting status information to the mobile terminal 1.

### (Step ST108)

When the posting status information is received from the posting analysis server 4, the mobile terminal 1 provides a notification of the posting status from the notification unit based on the posting status information. The mobile terminal 1, for example, may provide a notification indicating that the posting status of the content that is determined to be highly active is ranked in one of top positions in the order of the content whose cumulative number of posts of the posting information posted from a broadcasting start time is higher or it is ranked in one of top positions in the order of the content whose increase rate of postings per unit time is higher. As the notification method of the mobile terminal 1, an audio notification by a speaker or a light emission notification by a light emitting diode (LED) or the like provided in the mobile terminal 1 is available.

Thereby, the user of the mobile terminal 1 can perceive the notification by the notification unit of the mobile terminal 1 and recognize which of broadcast content is content of which the posting status is that the posting is trending (becoming more active) among broadcast content.

Consequently, when the notification indicating that there is content that is trending more than content displayed on the mobile terminal 1 at a current time has been provided, the user can change a channel to content of which the posting information is trending using the notification by the notification unit as the trigger.

Even when a power supply of the mobile terminal 1 is in an OFF state, the mobile terminal 1 may provide a notification of the posting status from the notification unit if the posting status information has been received from the posting analysis server 4. Thereby, it is possible to notify the user of the posting status and encourage browsing or video recording of content even in a state in which the mobile terminal 1 is not used.

### (Step ST109)

When the user of the mobile terminal 1 desires to change a channel of content or browse the content through the notification by the notification unit, an operation of requesting the distribution of the content is input to the mobile terminal 1. The mobile terminal 1 transmits a request command for requesting the content distribution server 2 to distribute the designated content. The user may designate content of which distribution is requested based on a notification result or the mobile terminal 1 may decide content of which distribution is requested based on the posting status information. For example, the mobile terminal 1 may provide a notification of the posting status based on the posting status information and transmit a request command for requesting the distribution of the content of which the posting status is that the content is trending most to the content distribution server 2. In this manner, the posting information can prevent the content that is trending most from being overlooked by automatically requesting the distribution of the trending content without waiting for the user's operation.

### (Step ST110)

The content distribution server 2 transmits data of requested content to the mobile terminal 1.

### (Step ST111)

The mobile terminal 1 receives the data of the content from the content distribution server 2.

Thereby, the mobile terminal 1 can reproduce content requested by the user based on the data of the distributed content.

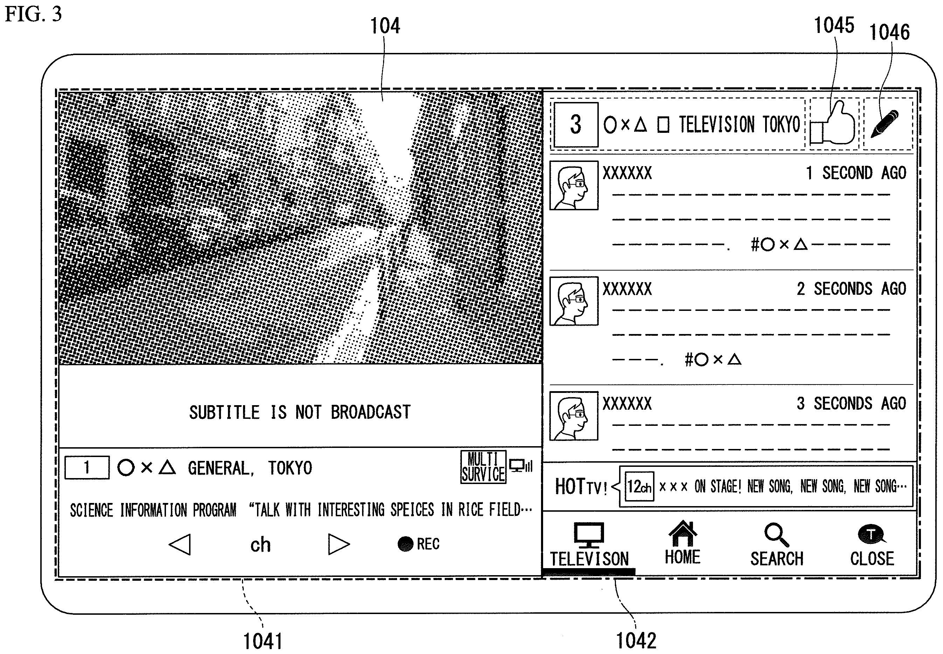

Next, an example of a screen to be displayed on the display 104 of the mobile terminal 1 will be described with reference to FIG. 3. FIG. 3 is a diagram showing an example of a screen on which content and posting information are simultaneously displayed. The screen shown in FIG. 3 is a screen capable of being displayed in a simultaneous display mode. As shown in FIG. 3, a state in which the information is correctly displayed in a state in which the rectangular display 104 is horizontally positioned is referred to as a horizontal display state. On the other hand, although not shown, a state in which the information is correctly displayed in a state in which the display 104 is vertically positioned is referred to as a vertical display state.

As shown in FIG. 3, the mobile terminal 1, for example, divides the overall screen of the display 104 into two regions, displays content in one region, and displays posting information posted on the WEB in the other region. The area in which the content is displayed is referred to as a content display region 1041. The area in which the posting information is displayed is referred to as a posting information display region 1042.

In an example shown in FIG. 3, the mobile terminal 1 displays content of a television program received from the content distribution server 2 in the content display region 1041 and displays posting information associated with the television program in the posting information display region 1042. In this exemplary embodiment, service details provided by Twitter (registered trademark) are displayed in the posting information display region 1042 of the display 104 shown in FIG. 3.

As shown in FIG. 3, a plurality of pieces of posting information are arranged and displayed in the posting information display region 1042. This posting information is arranged and displayed in time series according to the posting time.

In the posting information display region 1042, for example, an operation button or the like for searching for a program name or channel number of content displayed in the content display region 1041, a keyword (hot word) attracting a high degree of attention among posting information posted on the WEB, or related posting information among a plurality of pieces of posting information may be displayed. In the posting information display region 1042, the operation button to be used when the posting information is posted, a hashtag related to the content displayed on the content display region 1041, and the like may be displayed.

In the posting information display region 1042, a like button 1045 and a write button 1046 are included.

The like button 1045 is an operation button for accepting a posting of the "like posting." When an operation indicating the like button 1045 is input, the "like posting" is posted once. The mobile terminal 1 accepts the posting by accepting an input of an operation indicating the like button 1045 (that is, an operation of making contact with the like button 1045 or an operation of approaching the like button 1045).

The write button 1046 is an operation button for accepting the posting of the "write posting."

When the touch panel 101 accepts an input of an operation of indicating the write button 1046, the display 104 displays an input field for inputting text to be posted as the "write posting." When the text to be posted to the input field is input and the touch panel 101 accepts an input of an operation of indicating a posting button (not illustrated), the text input to the input field is posted as the "write posting."

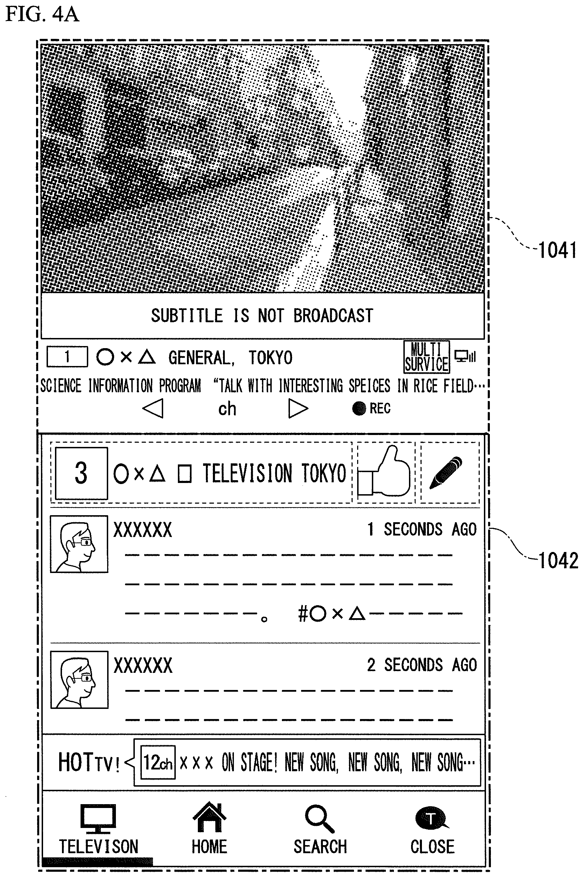

The display 104 of the mobile terminal 1 can display the content display region 1041 and the posting information display region 1042 in layouts as shown in FIGS. 4A to 4C.

FIG. 4A shows an example in which the display 104 arranges and displays the content display region 1041 on an upper portion, and arranges and displays the posting information display region 1042 on a lower portion, in the vertical display state.

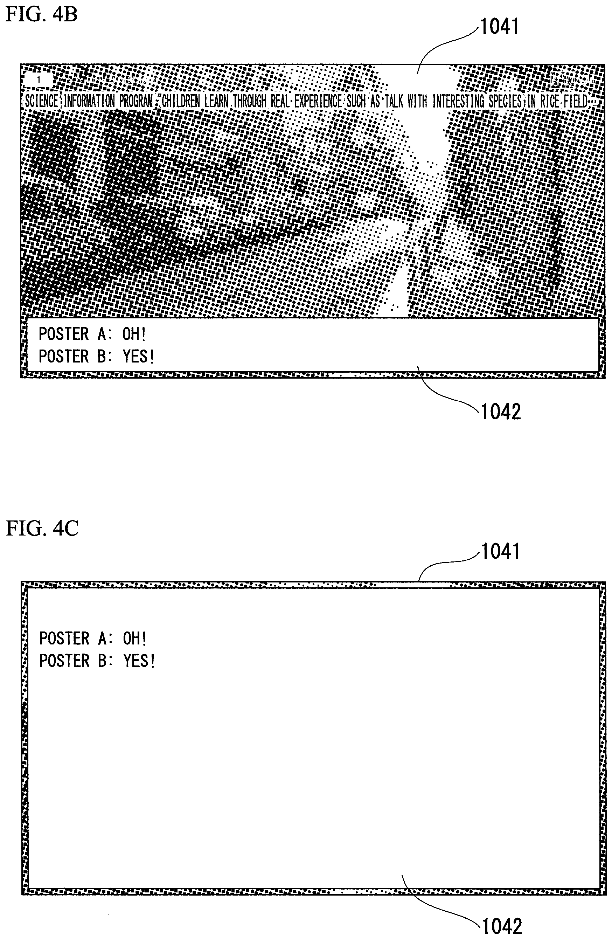

FIG. 4B shows an example in which the display 104 arranges and displays the content display region 1041 on an upper portion, and arranges and displays the posting information display region 1042 on a lower portion, in the horizontal display state.

FIG. 4C shows an example in which the display 104 displays the content display region 1041 on the overall screen of the display 104, and further superimposes and displays the posting information display region 1042 on the content display region 1041, in the horizontal display state.

As can be seen by comparing FIGS. 4A and 4B, a display example illustrated in FIG. 4B can be displayed on a larger screen than a display example illustrated in FIG. 4A. On the other hand, in the display example illustrated in FIG. 4B, an information amount of the posting information displayed on the posting information display region 1042 is limited.

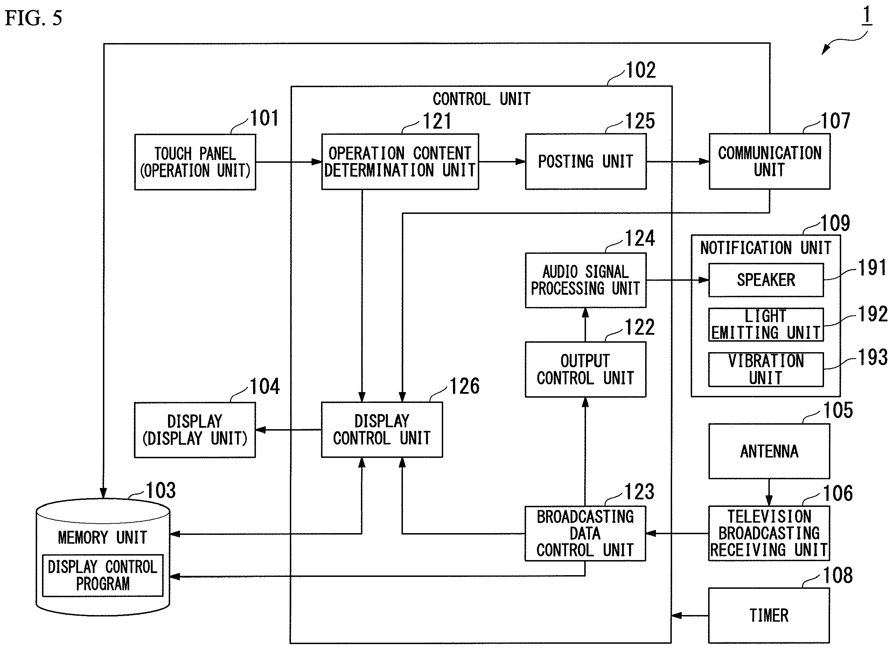

Next, basic constituent elements of the mobile terminal 1 will be described with reference to FIG. 5. FIG. 5 is a block diagram showing an example of the basic constituent elements of the mobile terminal 1.

The mobile terminal 1 includes a touch panel (operation unit) 101, a control unit 102, a memory unit 103, a display (display unit) 104, an antenna 105, a television broadcasting receiving unit 106, a communication unit 107, a timer 108, and a notification unit 109. The notification unit 109 includes a speaker 191, a light emitting unit 192, and a vibration unit 193.

The touch panel 101 includes a sensor for accepting an operation from the user, and outputs a detection result by the sensor to the control unit 102. In this exemplary embodiment, the touch panel 101 detects a contact position of a finger of the user in contact with an operation screen using the sensor at a given time interval and outputs a detection result of the sensor. This exemplary embodiment is not limited thereto. The touch panel 101, for example, may detect the finger of the user approaching an operation screen or a position of an operation indication means (stylus pen) or the like using a non-contact sensor.

The control unit 102 is a central processing unit (CPU) and includes a functional configuration unit which reads various types of information stored in the memory unit 103, generally controls the mobile terminal 1, and functions in accordance with processing details. This control unit 102 includes an operation details determination unit 121, an output control unit 122, a broadcasting data control unit 123, an audio signal processing unit 124, a posting unit 125, and a display control unit 126 as functional constituent elements.

The operation details determination unit 121 determines operation details accepted by the touch panel 101 based on an output from the touch panel 101. For example, the operation details determination unit 121 may determine the motion of the finger of the user from a contact position (or proximity position) or a contact time (or proximity time) of the finger of the user indicated by a detection result of the touch panel 101. The operation details determination unit 121 may determine operation details indicated by the motion of the finger of the user determined based on a positional relationship between the determined motion of the finger of the user and the image displayed on the display 104 when the operation is accepted.

For example, when the touch panel 101 has detected an operation in which the finger of the user is in contact with or in proximity to an icon portion or a text portion of a display screen, the operation details determination unit 121 may determine that the operation is a touch operation. When the touch panel 101 has detected an operation in which the finger moves in a state in which the icon portion or a predetermined operation region is indicated by the touch operation, the operation details determination unit 121 may determine that the operation is a slide operation.

The operation details determination unit 121 instructs the output control unit 122 and the display control unit 126 to display display details according to operation details on the display 104 based on a determination result.

The output control unit 122 executes notification control for causing the notification unit 109 to output an audio or light or vibrating the notification unit 109 based on operation details indicated by a determination result by the operation details determination unit 121 or a command input via the communication unit 107.

When an operation of outputting video-recorded content to the touch panel 101 has been input, the output control unit 122 performs control so that designated content data is read from the memory unit 103 and an audio is output to the speaker 191 based on the read content data.

When displaying received content data in real time is set (real-time mode), the broadcasting data control unit 123 controls the output control unit 122 to display the content data on the display 104 based on digitally modulated content data input from the television broadcasting receiving unit 106. When storing the received content data in the memory unit 103 and displaying the received content data thereafter are set (video recording mode), the broadcasting data control unit 123 stores the digitally modulated content data input from the television broadcasting receiving unit 106 in the memory unit 103.

When an input of a received baseband signal demodulated by the output control unit 122 is accepted, the audio signal processing unit 124 causes the speaker 191 to output an audio based on the received baseband signal. When an instruction for the output of a notification audio or message is issued by the output control unit 122, the audio signal processing unit 124 causes the speaker 191 to output the notification audio or message.

The posting unit 125 posts the posting information on WEB. When an instruction for the posting of the posting information input via the input field displayed on the display 104 has been issued, the posting unit 125 associates a poster ID (or terminal ID) with the input posting information and outputs the information to the communication unit 107.

Thereby, the communication unit 107 transmits the posting information associated with the poster ID (or terminal ID) to the posting information management server 3.

When the posting information has been posted, the posting unit 125 may generate content associated information related to content displayed on the display 104 and transmit the posting information including the generated content associated information to the posting information management server 3. This process will be described in detail later.

When the posting information has been posted, the posting unit 125 may generate content identification information indicating content displayed on the display 104, associate the generated content identification information with the posting information, and transmit the information to the posting information management server 3.

The display control unit 126 can cause the display 104 to simultaneously display the content display region 1041 and the posting information display region 1042.

More specifically, the display control unit 126 receives the posting information posted in relation to content displayed on the content display region 1041 from the posting information management server 3 and displays the posting information on the posting information display region 1042. Thereby, the user can view the posting information that is posted according to a temporal change of content in real time while browsing the content.

When the user has a desired opportunity to create and post his/her posting information while viewing the content, the user creates the posting information using a posting information creation function by the posting unit 125. Then, the display control unit 126 confirms a type of content of the content display region 1041. When the content identification information indicating the content displayed on the content display region 1041 is associated with the content data, the corresponding content identification information can also be included and output to the posting information management server 3 according to the user's operation or automatically by the posting unit 125.

The timing at which the content identification information may be added is until the posting of the created posting information ends after the creation of the posting information is indicated. The user may add his/her desired content identification information to the posting information.

In this manner, the posting information to be posted is acquired by the posting information management server 3. Further, the posting information is accumulated within the posting information management server 3 in association with posting time information indicating a posting time and content identification information.

An example of a display form when a content reproduction function and a posting function are executed by the mobile terminal 1 according to this exemplary embodiment will be described.

The mobile terminal 1 can display the content within the content display region 1041. In addition, the mobile terminal 1 can display the posting information acquired from the posting information management server 3 in time series within the posting information display region 1042.

The display control unit 126 can cause the content display region 1041 and the posting information display region 1042 to be independently activated and displayed in response to the user's operation. In addition, the display control unit 126 can cause the content display region 1041 and the posting information display region 1042 to be simultaneously displayed in response to the user's operation. Here, an example of a display form in which the content display region 1041 and the posting information display region 1042 are displayed in parallel as shown in FIG. 3 will be described.

In particular, if there is posting information having content identification information capable of being associated with content during reproduction, the display control unit 126 preferentially or automatically displays the posting information associated with the content identification information within the posting information display region 1042. Thereby, the user can view the posting information that is posted according to the temporal change of the content in real time while viewing the content.

As another method, display setting details may be switched by the user's operation so that displaying two display regions in parallel and displaying posting information corresponding to content to be reproduced are set. When the content display region 1041 and the posting information display region 1042 are set to be displayed in parallel, the display control unit 126 asks the posting information management server 3 whether there is posting information including content identification information indicating content being reproduced via the network. When this posting information is provided in the posting information management server 3, the display control unit 126 acquires this posting information at any time. Then, the display control units 126 sequentially displays the information on the posting information display region 1042 in a state in which the acquired posting information is associated with time information provided in the posting information and time information of the currently reproduced content displayed on the display 104. Thereby, because the posting information posted in real time for content currently being viewed is displayed, the viewer can immediately visually recognize what has been posted by another viewer for a specific scene or the like while the content is reproduced.

In this exemplary embodiment, hereinafter, the case in which content is content being broadcast (distributed from the server) will be described. However, a type of content is not limited thereto. The content may be content temporarily saved within the mobile terminal 1. In this case, the display control unit 126 or the content distribution server 2 associates the time information of the content and the time information included in the posting information according to a request from the mobile terminal 1, so that the mobile terminal 1 can also temporally link and display reproduction target information of the content and information posted for the reproduced scene.

The display control unit 126 controls a display form of content or posting information according to the content or posting information displayed on the display 104. The display control unit 126 executes at least one of first display control and second display control. When the first display control is executed, the display control unit 126 controls the display form of the posting information according to the content displayed on the display 104. When the second display control is executed, the display control unit 126 controls the display form of the content according to the posting information displayed on the display 104. A program for executing the first display control and the second display control is stored in the memory unit 103.

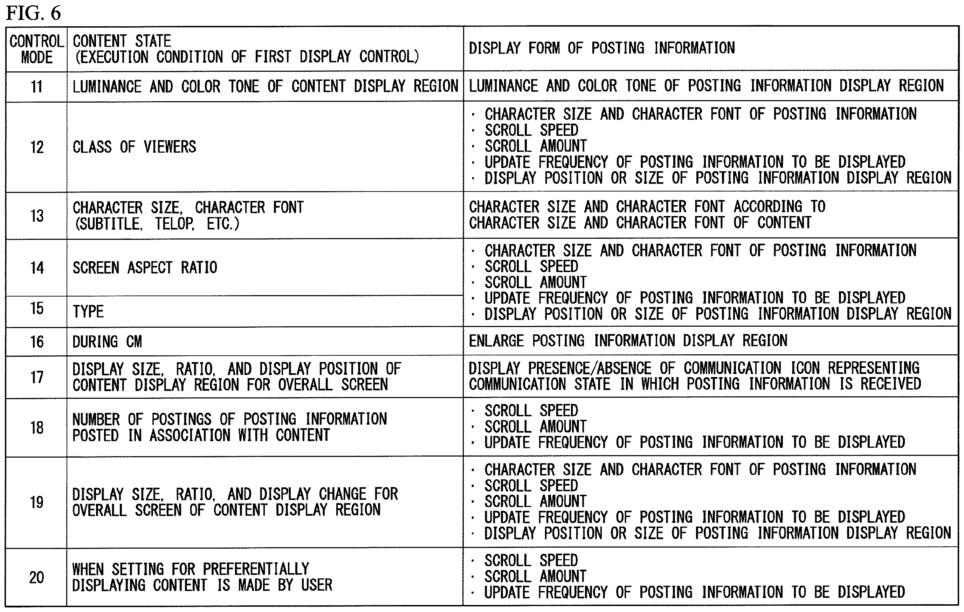

An example of the first display control according to this exemplary embodiment will be described with reference to FIG. 6. FIG. 6 is a reference diagram showing an example of the first display control according to this exemplary embodiment.

For example, when execution conditions of control modes '11' to '17' are satisfied, the display control unit 126 may execute the first display control according to the execution conditions. The display control unit 126 controls the display form of the posting information according to a content state.

### (Control Mode '11')

The display control unit 126 performs control for determining at least one of luminance and a color tone of the posting information according to at least one of luminance and a color tone of the content displayed on the display 104 in the control mode '11.'

On the content display region 1041, content of a reproduction target is displayed. The content is a moving image or the like and the content of which the display state (luminance or color tone) changes at any time is reproduced. On the other hand, text data of posting information or the like is displayed as main data in the posting information display region 1042. Thus, change amounts of the luminance and the color tone are relatively small in the posting information display region 1042. Consequently, the viewer is forced to simultaneously view a region in which the change of the display form is large and a region in which the change of the display form is small. This simultaneous viewing becomes a burden on the viewer as compared to when only content is viewed.

Therefore, the display control unit 126 controls the display form of the posting information display region 1042 based on the display environment information (for example, information indicating the luminance or color tone) of the content serving as the reproduction target by executing the control mode 11. The display control unit 126 may include an image processing unit for detecting the luminance or the color tone of the content displayed on the display 104. The image processing unit of the display control unit 126 can calculate the average value or a variance value of the luminance or the color tone of the image included in the content.

For example, the case in which a reproduction scene of the content is switched from a daytime scene to a dark night scene will be described. In this case, the display control unit 126 may execute a control process of decreasing the luminance of a background scene of the posting information display region 1042 or switching the color of the background screen from a background based on the color white to a background based on the color black according to the control mode '11.'

Thereby, the user can improve visibility by making display environments of two different regions (display forms of the content display region 1041 and the posting information display region 1042) equal or similar. In particular, because the posting information display region 1042 is a display region with high need of attention, it is possible to further improve visibility by making the display environments equal or similar.

### (Control Mode '12')

In the control mode '12,' the display control unit 126 performs control for determining at least one of a character size of the posting information, a character font of the posting information, a scroll speed within the posting information display region 1042, a scroll amount within the posting information display region 1042, an update frequency of the posting information, a display size of the posting information display region 1042, and a display position of the posting information display region 1042 within the display screen according to a class of viewers of the content displayed on the display 104.

When it is discriminated that content is desired by the class of viewers corresponding to the execution condition for executing the control mode '12' based on the content identification information included in the content during reproduction, the display control unit 126 can adjust the display form of the posting information according to the class of viewers.

For example, when content identification information indicating that content displayed on the display 104 is content for infants or the elderly is included in content data, the display control unit 126 can optimize the display form of the posting information posted in relation to the content displayed on the display 104 for infants or the elderly. In this case, the display control unit 126, for example, may make the character size of the posting information larger than normal, make the scroll speed lower than normal, make the scroll amount corresponding to the same operation amount smaller than normal, and make an update frequency lower than normal. Thereby, it is possible to control the display form so that a class of viewers having a low reading speed such as infants or the elderly can easily read the posting information.

The scroll speed is a movement speed (a feeding speed of page feeding or posting information feeding) of details of the posting information display region 1042 according to a scroll operation input via the touch panel 101. The display control unit 126 can adjust the scroll speed by changing a movement speed of information within the posting information display region 1042 according to a movement amount of a detected operating element (a user's finger, an operation pen, or the like).

The scroll amount is a movement amount of details of the posting information display region 1042 according to a scroll operation input via the touch panel 101.

The update frequency is a frequency at which the posting information displayed on the posting information display region 1042 is acquired from the posting information management server 3 or a frequency at which new posting information acquired from the posting information management server 3 is displayed on the posting information display region 1042.

Control by the display control unit 126 according to the control mode '12' is not limited to the above. For example, it is possible to reduce an information amount by providing an upper limit on the number of characters of the posting information. That is, the display control unit 126 causes the display 104 to display the fact that the input serving as the posting information is limited when the number of characters of the posting information input via the touch panel 101 exceeds a predetermined upper limit value. Thereby, it is possible to reduce an amount of information to be displayed on the posting information display region 1042 and enable the information to be easily viewed. As a result, it is also easy for infants or the elderly to check posting information updated in real time. As another method, the display control unit 126 may perform a display to hide a portion exceeding the upper limit value without displaying a total number of characters of the posting information on the posting information display region 1042 when the number of characters of the posting information received from the posting information management server 3 exceeds the upper limit value. When an operation of instructing to display hidden characters has been received from the touch panel 101, the display control unit 126 can cause the display 104 to display the hidden characters.

In the mobile terminal 1 which is a touch panel type display device, the user performs a scroll operation in the posting information display region 1042, thereby moving the posting information upward, moving the posting information downward, or updating the posting information, in order to efficiently check much posting information. The upward movement is a process of displaying posting information posted before posting information displayed on the display 104 in time series. The downward movement is a process of displaying the posting information posted after posting information displayed on the display 104 in time series. The update is a process of updating the posting information displayed on the display 104.

### (Control Mode '13')

In the control mode '13,' the display control unit 126 performs control for determining at least one of the character size and the character font of the posting information according to at least one of the character size and the character font to be displayed on the content displayed on the display 104.

According to this control mode '13,' the display control unit 126 can cause the posting information with the same character size or the same character font as the character size or the character font used in a subtitle or telop of the content displayed on the display 104 to be displayed on the posting information display region 1042.

### (Control Mode '14')

According to a screen aspect ratio of content displayed on the display 104 in the control mode '14,' the display control unit 126 performs control for determining at least one of a character size of the posting information, a character font of the posting information, a scroll speed within the posting information display region 1042, a scroll amount within the posting information display region 1042, an update frequency of the posting information, a display size of the posting information display region 1042, and a display position of the posting information display region 1042 within the display screen.

For example, when the aspect ratio of the content displayed on the display 104 is that of a wide image (16:9), the display control unit 126 performs a display so that the content display region 1041 is disposed in an upper portion and the posting information display region 1042 is disposed in a lower portion along a short-length direction of the display 104 in order to effectively utilize a display area of the display 104.

In addition, in the case of this display layout, a display area of the posting information display region 1042 may be narrowed in some cases. In this case, the display control unit 126 causes the posting information for which the character size or the character font is reduced to be displayed on the posting information display region 1042.

When the display 104 displays the content and the posting information in parallel, control is performed so that certain posting information with a real-time property tends to change and the display form corresponds to its change status. Thereby, it is possible to further improve the visibility of parallel displays.

The display control unit 126 can enlarge or reduce the display size of the posting information display region 1042 or enlarge or reduce the character size in which the posting information is displayed according to a change in the number of postings of the posting information acquired from the posting information management server 3.

### (Control Mode '15')

According to a type of content displayed on the display 104 in the control mode '15,' the display control unit 126 performs control for determining at least one of a character size of the posting information, a character font of the posting information, a scroll speed within the posting information display region 1042, a scroll amount within the posting information display region 1042, an update frequency of the posting information, a display size of the posting information display region 1042, and a display position of the posting information display region 1042 within the display screen.

For example, when content in which the number of postings of the posting information is expected to decrease, such as a Japanese chess program, is displayed on the display 104, the display control unit 126 may reduce a ratio of the posting information display region 1042 occupying the overall screen of the display 104. In other words, the display control unit 126 can reduce or enlarge the size of the posting information display region 1042 and change the display position to a position in which the posting information display region 1042 with the changed size can be displayed. In addition, the display control unit 126 can reduce or enlarge the character size of the posting information according to a display size of the posting information display region 1042.

### (Control Mode '16')

In the control mode '16,' the display control unit 126 performs control for determining the display position or size of the posting information display region 1042 according to a period in which a commercial message (CM) is displayed on the content display region 1041 of the display 104.

The display control unit 126 can automatically enlarge the posting information display region 1042 or display the posting information display region 1042 on the overall screen at the time of CM broadcasting in a state in which content distribution is temporarily stopped based on display environment information included in the content data. Display environment information, for example, may be information indicating a reproduction period of the CM included in the content displayed on the display 104. Thereby, in a time slot in which the display of the content is temporarily stopped, the user can efficiently check the posting information.

The display control unit 126 can determine whether the CM is being broadcast based on the display environment information of the content. When a period of the CM indicated by the display environment information matches a current time, the display control unit 126 recognizes that the CM is currently being broadcast and causes the posting information display region 1042 to be superimposed and displayed on the content display region 1041. This display example is shown in FIG. 4C.

As shown in FIG. 4C, it is possible to reduce a region in which content is displayed in the content display region 1041 or set the region in a non-display state so that it is easy for the user to focus on browsing of the posting information while the CM is being broadcast. The non-display state mentioned here includes both the case in which the posting information display region 1042 is displayed to be superimposed on the overall region of the content display region 1041 and the case in which only the posting information display region 1042 is displayed in the overall region of the display 104.

While the CM is broadcast, the display control unit 126 can also secure the content display region 1041 to an extent to which display details of the CM can be checked and enlarge and display the posting information display region 1042 when the posting information display region 1042 is displayed to be superimposed on the content display region 1041. For example, the display control unit 126 performs display control in which a ratio between region areas of the CM display region (that is, the content display region 1041) and the posting information display region 1042 is about 2:8 in terms of the region area. Thereby, the user can also easily check the posting information without inputting an operation of setting the posting information on the overall screen during viewing and input an operation of enlarging and displaying the CM if there is a CM in which he or she is interested while checking information of the CM during broadcasting.

### (Control Mode '17')

In the control mode '17,' the display control unit 126 performs control for determining whether to display a communication icon indicating a communication state in which the posting information is received on the posting information display region 1042 according to a display size of the content display region 1041 for the overall screen of the display 104, its ratio, and a display position (layout change).

This communication icon, for example, may be an icon in which the communication state is represented by levels (1) to (3). The level (1) represents the worst communication state. The level (3) represents the best communication state.

For example, when the posting information displayed in the posting information display region 1042 is not updated, there is a possibility that it is difficult to discriminate whether the posting of the posting information is stopped or the communication state is bad. For example, when the content being enlarged is displayed on the display 104, the user can determine that the communication state is good by viewing the content if the content moves.

On the other hand, when the ratio of the content display region 1041 occupying the display 104 is extremely small compared to a ratio of the posting information display region 1042, or when, in a vertical display state, the content display region 1041 is displayed to be in a higher portion and the posting information display region 1042 is displayed to be in a lower portion, there is a possibility that it is difficult for the user to discriminate whether the posting of the posting information is stopped or the communication state is bad. In this case, the display control unit 126 is configured to cause the communication icon to be displayed on the posting information display region 1042.

For example, the case in which only the content display is performed in the horizontal display state and two regions of the content display and the posting information display are provided in the vertical display state will be described in a layout change. In this case, the display control unit 126 may be configured to display the communication icon in the vertical display state without displaying the communication icon in the horizontal display state.

This communication icon is an indicator indicating a communication environment by a communication means to be used when posting information in which a real-time property is particularly required is acquired. In the case of the display form in which the posting information display region 1042 is provided, the display control unit 126 displays communication information so that it can be determined whether the posting information can be acquired.

When the posting information display region 1042 is in the non-display state or a state in which the posting information display region 1042 being reduced is displayed, it is determined that the user's degree of interest in the posting information is low. Thus, in this case, the display control unit 126 may not display the communication icon. Thereby, when attention is paid to desired information, the visibility of information of an attention target is improved without information that is not particularly necessary being displayed. In addition, when posting information in which the real-time property is required is displayed, a process of displaying the communication information is performed because it is necessary to find a communication status according to the nature of information.

Thereby, a display process for improving reliability for the posting information is possible.

### (Control Mode '18')

In the control mode '18,' the display control unit 126 performs control for determining at least one of a scroll speed, a scroll amount, and an update frequency according to the number of postings of the posting information posted in association with content displayed on the display 104.

A change in the display form of the posting information display region 1042 by the display control unit 126 may be made in a speedy process of setting a movement speed of display details or in a quantitative process of setting a movement amount of the display details.

That is, the display control unit 126 can change a display of the posting information displayed on the posting information display region 1042 based on a speed value or a movement amount obtained in a scroll operation including a flick operation, a drag operation, and so on. The speed value is a value indicating a speed of motion of an operator inputting the flick operation or the drag operation detected by the touch panel 101. The movement amount is a value indicating a movement amount of motion of the operating element inputting the flick operation or the drag operation detected by the touch panel 101. An amount (motion amount) of motion of an operation represented by the speed value or the movement amount is referred to as an operation amount.

Changing a display according to the speed value means determining a scroll speed or a scroll amount corresponding to the speed value detected by the touch panel 101 according to the number of postings of the posting information posted in association with content displayed on the display 104.

For example, it is assumed that the display control unit 126 can display the posting information on the posting information display region 1042 in units of five postings. In addition, it is assumed that the number of postings of the posting information received from the posting information management server 3 in one update process among the posting information posted in association with content displayed on the content display region 1041 of the display 104 is 10. In this case, the display control unit 126 makes a change from a display state of first to fifth posting information to a display state of third to seventh posting information per unit time according to a scroll operation of a vector amount of "operation amount = 5." That is, it is assumed that, in a state in which 10 pieces of posting information acquired by updating the posting information posted in association with the content displayed on the display 104 can be displayed, the touch panel 101 has detected a scroll operation of "operation amount = 5" by the touch panel 101. In this case, the display control unit 126 makes a change from a display state of first to fifth posting information to a display state of third to seventh posting information. In other words, the display control unit 126 changes display details to be displayed on the posting information display region 1042 so that three pieces of posting information move down or up.

On the other hand, it is assumed that the number of postings of the posting information received from the posting information management server 3 in one update process among the posting information posted in association with content displayed on the display 104 is 20. In this case, the display control unit 126 makes a change from a state in which first to fifth posting information is displayed to a display state of sixth to tenth posting information per the same unit time at once even in a scroll operation in the same vector amount of "operation amount = 5." That is, it is assumed that, in a state in which 20 pieces of posting information acquired by updating the posting information posted in association with the content displayed on the display 104 can be displayed, the touch panel 101 has detected a scroll operation of "operation amount = 5" by the touch panel 101. In this case, the display control unit 126 makes a change from a display state of first to fifth posting information to a display state of sixth to tenth posting information. In other words, the display control unit 126 changes display details displayed on the posting information display region 1042 so that five pieces of posting information move down or up.

When the display is changed according to a movement amount, it is possible to continue a display change after the operation as well as during a scroll operation according to the vector amount which is a detection result. Thus, it is possible to provide a feeling of operation which is not limited to the operation state.

### (Control Mode '19')

According to at least one of a ratio for an overall screen of the content display region 1041 displayed on the display 104 and a display change in the control mode '19,' the display control unit 126 performs control for determining at least one of a character size of the posting information, a character font of the posting information, a scroll speed within the posting information display region 1042, a scroll amount within the posting information display region 1042, an update frequency of the posting information, a display size of the posting information display region 1042, and a display position of the posting information display region 1042 within the display screen.

For example, when a display is performed by disposing the content display region 1041 in an upper portion and disposing the posting information display region 1042 in a lower portion in the horizontal display state, a display area of the posting information display region 1042 is narrowed. In addition, an amount of information capable of being displayed is also limited. In this case, the display control unit 126 decreases the scroll speed, reduces a scroll amount according to the same operation amount, or reduces the update frequency. Thereby, it is possible to easily view the posting information displayed on the posting information display region 1042.

Through an attitude sensor or a shape detection means provided in the mobile terminal 1, it is also possible to detect a state of the display 104 which displays the display regions (the content display region 1041 and the posting information display region 1042) and optimize the display regions according to the detected state.

For example, when the mobile terminal 1 is a one-screen type terminal, the attitude sensor senses whether the display 104 is in the horizontal display state or the vertical display state. Further, according to the sensing result, the display control unit 126 determines whether to dispose the regions left and right or dispose the regions up and down and makes a display change. That is, the display control unit 126 may determine a ratio of display sizes of the content display region 1041 and the posting information display region 1042 displayed on the display 104 based on the attitude of the mobile terminal 1 and make the display change of the posting information display region 1042 according to a determination result.

Even when the mobile terminal 1 is a two-shaft hinge type terminal, a slide type terminal, or the like, the shape sensing means may sense which of a layout in which the regions are arranged left and right and a layout in which the regions are arranged up and down is preferable. The display control unit 126 may cause the layout of the display regions to be changed based on a sensing result of the shape sensing means.

Thereby, the optimization of the display form is easily performed. The optimization of this display form is also linked to a region change of the content display region 1041 provided within the posting information display region 1042 or in the vicinity of the posting information display region 1042. Thus, it is possible to promote the improvement of operability for creating information for a posting while viewing the content and the posting information as well as the optimization of a simple display form.

### (Control Mode '20')

When the user sets preferential display of the content display region 1041 in the control mode '20,' the display control unit 126 performs control for determining at least one of a scroll speed, a scroll amount, and an update frequency according to the settings.

When the user views the content, the display control unit 126 of the mobile terminal 1 mainly sets the display regions roughly classified into the content display region 1041 and the posting information display region 1042 on the display 104.

A size of each of the two display regions or the like, for example, may be adjusted according to priority of a display state of each region.

A state in which the priority of the content display region 1041 is high includes the case in which a condition that the mobile terminal 1 be used exclusively for content viewing set for the mobile terminal 1 by the user is satisfied.

This condition, for example, may be satisfied when the enlargement of the content display region 1041 has been set, when an aspect ratio of the display unit 104 of the mobile terminal 1 has been changed, or when a change in a position of the mobile terminal 1 has been made. For example, when the mobile terminal 1 is the two-shaft hinge terminal, this condition may be satisfied when the display 104 has a shape of an externally exposed viewer style. In a cycloid type terminal, this condition may be satisfied when the mobile terminal 1 has a shape in which the housing of the display 104 is horizontally disposed. If the mobile terminal 1 is of a tablet type serving as a single housing body, it may be configured such that the priority of the content display region 1041 is high when the attitude sensor provided in the mobile terminal 1 has detected a horizontal layout state. These condition settings can be changed according to the user's setting change.

The state in which the priority of the posting information display region 1042 is high represents the case in which it is sensed that the posting state is that the posting is trending. The case in which it is sensed that the posting state is that the posting is trending, for example, may include the case in which the number of postings or an increase rate per unit time is greater than or equal to a predetermined value or the case in which the total number of postings from a content viewing start time exceeds a predetermined amount.

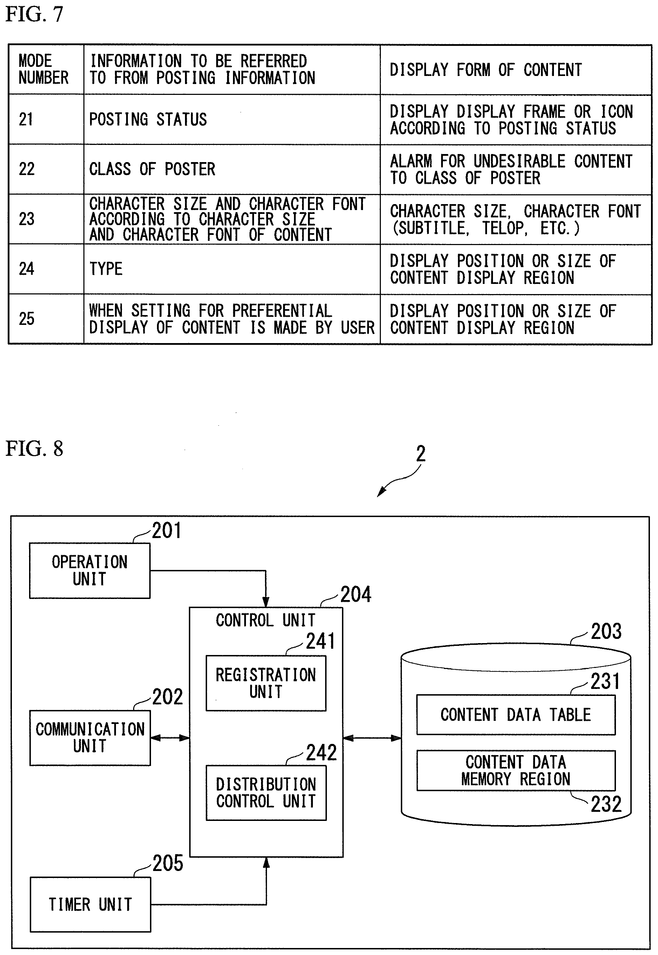

Next, an example of second display control according to this exemplary embodiment will be described with reference to FIG. 7. FIG. 6 is a reference diagram showing the example of the second display control according to this exemplary embodiment.

The display control unit 126, for example, may execute the second display control of control modes '21' to '25.' The display control unit 126 controls a display form of the posting information according to the posting information.

### (Control Mode '21')

In the control mode '21,' the display control unit 126 performs control for determining a display form of content according to a posting status of the posting information or notification details of the posting status displayed on the posting information display region 1042 of the display 104.

This posting status, for example, may be a posting status analyzed by an analysis unit 442 of the posting analysis server 4. The notification details of the posting status are notification details controlled by the notification control unit 443.

As an example, the case in which the posting status of the posting information displayed on the posting information display region 1042 is that it is trending in a state in which the posting information associated with content displayed on the display 104 is displayed on the posting information display region 1042 will be described. In this case, the display control unit 126 can notify the content browsing user of the posting status by displaying a red frame on the content display region 1041.

The case in which the posting status of the posting information displayed on the posting information display region 1042 is that it is not trending in a state in which the posting information associated with content displayed on the display 104 is displayed on the posting information display region 1042 will be described. In this case, the display control unit 126 can notify the user who is browsing content of the posting status by displaying a blue frame on the content display region 1041.

The case in which the posting status of the posting information displayed on the posting information display region 1042 is that it is becoming erupted in a state in which the posting information associated with content displayed on the display 104 is displayed on the posting information display region 1042 will be described. In this case, the display control unit 126 can notify the user who is browsing content that the posting status is that it is becoming erupted by displaying an image representing eruption or a character(s) representing eruption on the content display region 1041.

### (Control Mode '22')

In the control mode '22,' the display control unit 126 performs control for limiting a display of content for the content display region 1041 according to a class of posters of the posting information to be displayed on the posting information display region 1042 of the display 104.

The user may be registered in a WEB service for allowing a posting of the posting information to be received or browsed so as to post the posting information via the posting information display region 1042. At this time, the age or gender of the poster or the like is registered. Consequently, when the posting information has been posted from each terminal, the posting information management server 3 can transmit information indicating an attribute of the previously registered poster to the mobile terminal 1.

For example, in the case where the poster is 18 years old or younger, when the display of the content for which the browsing by those of 18 years old or younger is inhibited is indicated, the display control unit 126 limits a display for the content display region 1041. The limit of the display may be a process in which no content is displayed or a process of superimposing and displaying a mask on content displayed on the content display region 1041.

### (Control Mode '23')

In the control mode '23,' the display control unit 126 performs control for determining a display form of a character size or font within content according to a character size or font of the posting information displayed on the posting information display region 1042 of the display 104.

Through the control mode '23,' the display control unit 126 can cause the subtitle or telop posting information of the same character size or the same character font as the character size or the character font used in the posting information displayed on the display 104 to be displayed on the content display region 1041.

### (Control Mode '24')

In the control mode '24,' the display control unit 126 performs control for determining a display form of content according to a type of posting information displayed on the posting information display region 1042 of the display 104.

In the case of the "like posting," the number of postings is displayed on the posting information display region 1042. On the other hand, in the case of the "write posting," written details, a poster's icon, or the like are displayed on the posting information display region 1042. Thus, a display area necessary to display the "like posting" on the posting information display region 1042 is smaller than a display area necessary to display the "write posting" on the posting information display region 1042. In this manner, according to the information amount displayed on the posting information display region 1042, the display control unit 126 can change ratios (sizes) of the content display region 1041 and the posting information display region 1042 occupying the display screen of the display 104 or a display position of each display region.

### (Control Mode '25')

When the user sets preferential display of the posting information display region 1042 in the control mode '25,' the display control unit 126 performs control for determining the display form of the content according to the settings.

When the posting information display region 1042 is preferentially displayed, the display control unit 126 can change ratios (sizes) of the content display region 1041 and the posting information display region 1042 occupying the display screen of the display 104 or a display position of each display region. This display control unit 126, for example, may change the display form so that the size of the posting information display region 1042 in the display screen of the display 104 is greater than that of the content display region 1041.

Returning to FIG. 5, the description of the mobile terminal 1 will continue.

The display control unit 126 executes display control for the display 104 based on operation details representing a determination result by the operation details determination unit 121 or a command input via the communication unit 107.

In this exemplary embodiment, the display control unit 126 executes a content screen display process of displaying content on the display 104 and a posting screen display process of displaying an image for posting the posting information on the WEB on the display 104. The display control unit 126 can switch between a simultaneous display mode and a single display mode. When the mode is set to the simultaneous display mode, the display control unit 126 causes the content and the posting information to be arranged and displayed on one screen. When the mode is set to the single display mode, the display control unit 126 causes information of either one of the content and the posting information to be displayed on the overall screen of the display 104. More specifically, when the user has designated either of the simultaneous display mode and the single display mode, the display control unit 126 switches a screen to be displayed on the display 104 according to the designated mode.

When the touch panel 101 has accepted an input of an operation of outputting video-recorded content, the display control unit 126 reads designated content data from the memory unit 103 and causes an image based on the read content data to be displayed on the display 104.

The display control unit 126 and the output control unit 122 decide a notification manner by the notification unit 109 based on posting status information input from the communication unit 107. More specifically, the display control unit 126 and the output control unit 122 decide a notification method according to the posting status based on the posting status information by referring to the memory unit 103. The notification method according to the posting status may be predetermined or set by the user of the mobile terminal 1. The notification method according to the posting status is registered in the memory unit 103.

The display control unit 126 and the output control unit 122 cause the notification unit 109 or the display 104 to provide a notification of the posting status according to the decided notification method.

For example, when the input of the posting status information has been accepted via the communication unit 107, the display control unit 126 and the output control unit 122 may cause the speaker 191 to output a determined audio, cause the light emitting unit 192 to turn light of a determined color on or off, or cause the vibration unit 193 to be vibrated in a determined vibration pattern. When the posting status information of which the input has been accepted, for example, indicates that the posting status of the content broadcast by a broadcasting station A is that the content is trending most, the display control unit 126 and the output control unit 122 may cause the display 104 to display that the posting status of the content broadcast by the broadcasting station A is that the content is trending most. That is, when the posting status information has been received, the display control unit 126 and the output control unit 122 may cause the notification unit 109 to execute a notification operation or cause the notification unit 109 to execute a notification operation according to the posting status.

The display control unit 126 and the output control unit 122 can provide a notification of the posting status when the posting status information has been received in a standby state of the mobile terminal 1, during reproduction of content, or in a lock state. The standby state includes a state in which an operation is performed in a power saving mode or a state in which an initial screen is displayed. The lock state includes a state in which an operation for the touch panel 101 of the mobile terminal 1 is limited. In this lock state, any operation other than an operation of releasing the lock state is limited and a malfunction due to an erroneous operation is prevented.

When the posting status has been received, the display control unit 126 and the output control unit 122 may cause the display 104 to display an operation button for accepting an indication of reproduction of content of which the posting status is determined to be that the content is trending. When the reproduction of the content of which the posting status is determined to be that the content is trending has been indicated via the touch panel 101, the display control unit 126 and the output control unit 122 reproduce the indicated content. The display control unit 126 and the output control unit 122, for example, may transmit a request command for requesting the transmission of content data of the content of which the reproduction has been indicated to the content distribution server 2. The display control unit 126 and the output control unit 122 may acquire and reproduce the content data of the content of which the reproduction has been designated among broadcasting content distributed by the content distribution server 2.

When the posting status information has been received even when an operation indication of content reproduction is not input from the user, the display control unit 126 and the output control unit 122 may automatically reproduce the content of which the posting is trending most. That is, the display control unit 126 and the output control unit 122 may reproduce content of which the posting status is determined to satisfy a notification condition when the posting status satisfies the notification condition. Even when the mobile terminal 1 is in a standby state, a sleep state, or a lock state, the display control unit 126 and the output control unit 122 may automatically reproduce content of which the posting is trending most based on the posting status information.

The memory unit 103 stores various information for use in a process of the mobile terminal 1. The memory unit 103 temporarily stores posting information which is being created. In addition, the memory unit 103 stores the posting information received from the posting information management server 3, the content data downloaded from the content distribution server 2, and the like. Further, the memory unit 103 stores setting information prescribing a notification method according to the posting status.

The memory unit 103, for example, may be a configuration including a portable memory (recording medium) detachable from the mobile terminal 1 such as an SD card or an IC card. The memory unit 103 may be provided on a predetermined external server (not illustrated).

The display 104 displays an image according to control of the control unit 102. In this exemplary embodiment, the display 104 is provided to be integrated with the touch panel 101. The display 104 displays an operation screen when the touch panel 101 accepts an operation.

The display 104 displays an image of reproduced content data or posting information. In addition, the display 104 functions as a notification unit for providing a notification of notification details to the user by displaying an image based on the input image data.

The display 104 may have a display region divided into a plurality of pieces within the same display device or may be constituted of an independent display device for each display region.

The antenna 105 receives radio waves of a frequency specified for television broadcasting and outputs an analog signal of the received radio waves to the television broadcasting receiving unit 106.

The television broadcasting receiving unit 106 configures a television function. The television broadcasting receiving unit 106 receives content data of terrestrial digital television broadcasting of one segment for the mobile terminal and program information such as information (content-accompanying information) related to details of content, or an electronic program table (EPG information) via the antenna 105. The television broadcasting receiving unit 106 includes an analog circuit unit configured to extract broadcast data of a channel pre-selected from among the television broadcast data received by the television antenna 105 and a digital circuit unit configured to digitally modulate broadcast data. This digital circuit unit, for example, may perform orthogonal frequency division multiplexing (OFDM) demodulation on the received broadcast data, perform decoding by separating a video, an audio, and data (character data) from the multiplexed broadcast data, or perform decompression of compressed data or the like.

The communication unit 107 is connected to the wireless communication network 5 and the Internet 6 via the base station 5A and the exchange 5B. The communication unit 107, for example, may receive the posting information or the like transmitted from the posting information management server 3 via the Internet 6. More specifically, the communication unit 107 receives content data from the content distribution server 2. In addition, the communication unit 107 performs transmission and reception of the posting information to and from the posting information management server 3.

The timer 108 measures a current date and time (date and time) and outputs information about the measured date and time.

The notification unit 109 notifies the user of notification details using various means. As described above, the notification unit 109, for example, may include the speaker 191, the light emitting unit 192, and the vibration unit 193.

The speaker 191 converts a signal of which the input has been accepted from the audio signal processing unit 124 into an audio signal and outputs the audio signal.

The light emitting unit 192, for example, may include an LED and is turned on or off in a designated color according to control of the output control unit 122.

The vibration unit 193 is vibrated in a designated vibration pattern according to control of the output control unit 122.

Next, the content distribution server 2 will be described with reference to FIG. 8. FIG. 8 is a diagram showing an example of a configuration of the content distribution server 2.

As shown in FIG. 8, the content distribution server 2 includes an operation unit 201, a communication unit 202, a memory unit 203, a control unit 204, and a timer unit 205.

The operation unit 201, for example, may accept an operation from a manager of the content distribution server 2 and output an operation signal indicating the accepted operation.

The communication unit 202 performs transmission and reception of information to and from the mobile terminal 1 via the Internet 6 and the wireless communication network 5.

The memory unit 203 stores information associated in a content data table 231 and stores content data to be distributed in a content data memory region 232.

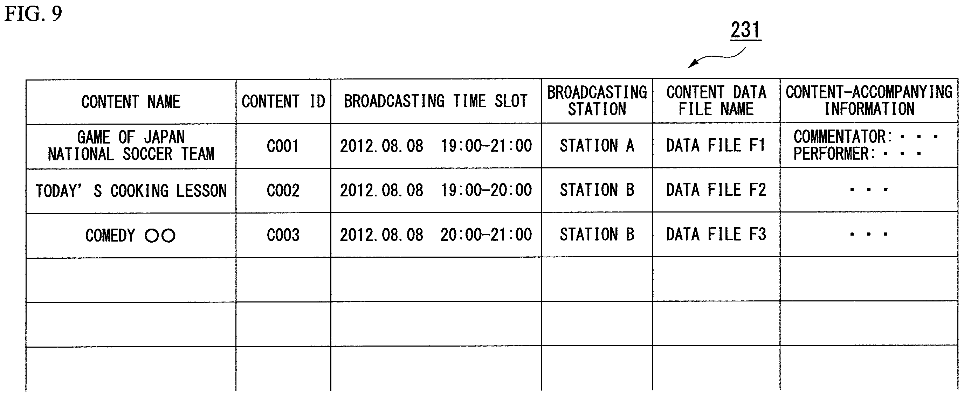

An example of the content data table 231 will be described with reference to FIG. 9.

FIG. 9 is a diagram showing an example of the content data table 231.

The content data table 231 is a table in which a content name, a content ID, a broadcasting time slot, a broadcasting station, a content data file name, and content-accompanying information are associated and stored. The content name represents a name of content. The content ID indicates an identification number of the content. The broadcasting time slot represents a time slot in which the content is broadcast. The broadcasting station represents a television station by which the content is broadcast. The content data file name represents a file name of the content data. The content-accompanying information represents an attribute of the content.

This content includes a video and audio of a television program to be digitally broadcast and an audio to be distributed such as radio or music. Hereinafter, an example in which the content is the video and audio of the television program to be digitally broadcast in this exemplary embodiment will be described.

The content name, for example, may be a program name, a drama to be broadcast, or a title of a movie.

The broadcasting time slot refers to a time slot predetermined as a time at which the content is broadcast or distributed.

The content-accompanying information is a generic term for information indicating the attribute of the content or information attached to the content. When the content is a video and audio of a television program, the content-accompanying information may include a program name, a broadcasting station name, a performer name, a program genre name, other information related to program details, and the like. The content-accompanying information may be information predetermined by a broadcasting station by which a television program is broadcast, a production station, or the like or may be determined by the manager of the content distribution server 2.

The content name, the content ID, and the content-accompanying information may be content identification information. It is possible to generate the content identification information by specifying the content based on a broadcasting time slot indicating a time slot in which the content is broadcast and a broadcasting station representing a television station by which the content is broadcast. Consequently, when the content is distributed to the mobile terminal 1, the content distribution server 2 may distribute the content name, the content ID, the content-accompanying information, and the like. When the posting information management server 3 or the posting analysis server 4 determines content corresponding to the posting information and generates content identification information, the content distribution server 2 may transmit the information stored in the content data table 231 to the posting information management server 3 or the posting analysis server 4 if information stored in the content data table 231 is used.

Returning to FIG. 8, the description of each configuration of the content distribution server 2 will continue.

The control unit 204 is a CPU and includes a functional configuration unit which reads various types of information stored in the memory unit 203, generally controls the content distribution server 2, and functions in accordance with processing details. This control unit 204 includes a registration unit 241 and a distribution control unit 242 as functional configuration units.

For example, when content data provided from a distribution source of content of each television station or production station or the like is received from the communication unit 202, the registration unit 241 registers the data in the content data memory region 232. In this case, the registration unit 241 associates information (a content name, a content ID, a broadcasting time slot, a broadcasting station, a content data file name, content-accompanying information, and the like) related to the content data and writes the information to the content data table 231.

For example, when a current time has reached a start time of a broadcasting time slot according to the content data table 231, the distribution control unit 242 reads content data corresponding to the broadcasting time slot from the content data memory region 232 and broadcasts the data from the transmission antenna 8 via the communication unit 202.

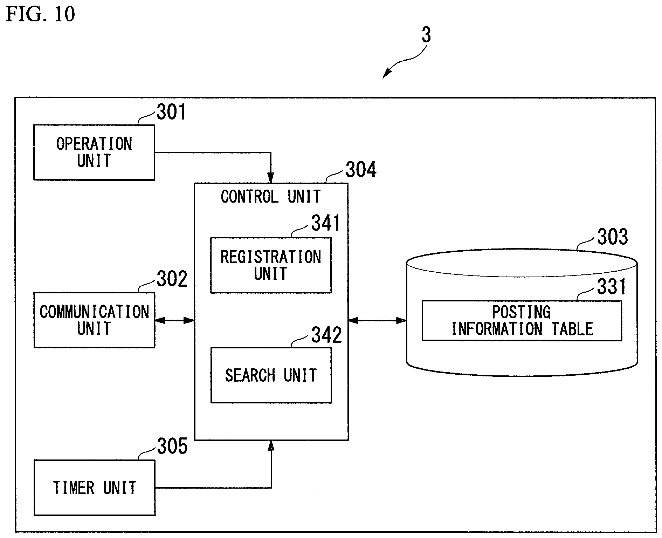

Next, the posting information management server 3 will be described with reference to FIG. 10. FIG. 10 is a diagram showing an example of a configuration of the posting information management server 3.

As shown in FIG. 10, the posting information management server 3 includes an operation unit 301, a communication unit 302, a memory unit 303, a control unit 304, and a timer unit 305.

The operation unit 301 receives an operation from the manager of the posting information management server 3 and outputs an operation signal indicating the received operation.

The communication unit 302 performs transmission and reception of information to and from the mobile terminal 1 and the posting analysis server 4 via the Internet 6 and the wireless communication network 5.

The memory unit 303 stores information associated in the posting information table 331

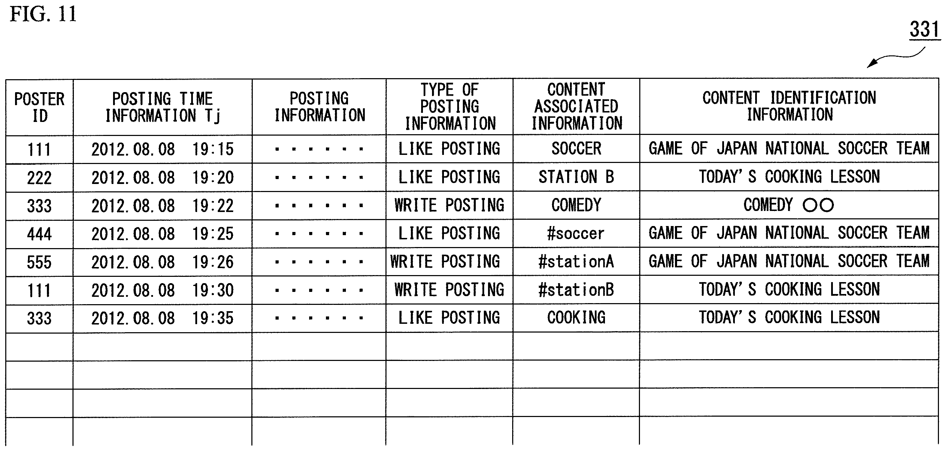

FIG. 11 is a diagram showing an example of the posting information table 331.

The posting information table 331 is a table in which a poster ID, posting time information, posting information, a type of posting information, and content associated information included in the posting information are associated and the information is stored.

The poster ID is information for identifying each poster, and for example, may be a unique terminal ID allocated to the mobile terminal 1. The poster ID is not limited thereto and may be a user ID registered on a posting WEB service in which the poster is registered. The poster ID may be a user ID for specifying each poster logging in to the mobile terminal 1.

The posting time information is information indicating the time or period at or in which the posting information has been posted. The posting time information may be a time measured by the timer unit 305 when the posting information has been received in the communication unit 302. The posting time information may be a time measured in the mobile terminal 1 or 7 when the posting information has been transmitted from the mobile terminal 1 or 7.

The posting information is a character string indicating posting details posted by the poster or information indicating the posting details posted by the poster.

The type of posting information, for example, is information indicating whether the posting information is a "like posting" or a "write posting."

The content associated information is information included in the posting information. The content associated information, for example, may be a character string or hashtag indicating a television station name or program name of content or a character string or hashtag indicating details of content or a keyword or the like related to a performer or content details. The content associated information may be information extracted from the posting information by the control unit 304. The content associated information may be information registered in the memory unit 303 in association with information included in the posting information, a broadcasting time slot of content, a distribution time slot, or the like. The content associated information is information acquired by the control unit 304 based on the posting information. A method of acquiring the content associated information will be described later.

Returning to FIG. 10, description of each configuration of the posting information management server 3 will continue.

The control unit 304 is a CPU and includes a functional configuration unit which reads various types of information stored in the memory unit 303, generally controls the posting information management server 3, and functions in accordance with processing details. This control unit 304 includes a registration unit 341 and a search unit 342 as functional configuration units.

When the posting information has been received from the mobile terminal 1 or 7 via the communication unit 302, the registration unit 341 associates the received posting information, the poster ID, the posting time information, the type of posting information, the content associated information, and the content identification information and writes the information to the posting information table 331.

For example, when the posting information is received via the communication unit 302, the registration unit 341 acquires a time measured by the timer unit 305 as posting time information when the posting information has been received.

The registration unit 341 acquires the poster ID transmitted along with the posting information. When the terminal ID has been received, the registration unit 341 may acquire the terminal ID as the poster ID or acquire the poster ID associated with the terminal ID in advance from the memory unit 303.

The registration unit 341 determines a type of the received posting information, associates the determined type of posting information with the posting information, and writes the information to the posting information table 331. The registration unit 341 determines whether the posting information is a "like posting" or a "write posting," and writes information indicating the type of posting information to the posting information table 331.

When the posting information is received through the communication unit 302, the registration unit 341 acquires content associated information included in the posting information. For example, when the hashtag is included in the posting information, the registration unit 341 may acquire the hashtag as the content associated information. When the posting information includes a program name, a broadcasting station name or a performer name, or a relevant word specified in advance, the registration unit 341 may acquire the information as the content associated information. The relevant word is a predetermined keyword and includes a word indicating a genre of content such as sports, a comedy, a drama, or a movie, a word indicating a type of sport such as baseball, soccer, golf, volleyball, or table tennis, or the like. When the posting information is associated with a channel number or a content ID of the content reproduced in the mobile terminal 1, the registration unit 341 may acquire the information associated with the posting information as the content associated information. When the information stored in the content data table 231 registered in the content distribution server 2 is registered in the memory unit 303, the registration unit 341, for example, may acquire information indicating the broadcasting time slot of the content reproduced by the mobile terminal 1 based on the posting time of the posting information and acquire the content name, the content ID, the broadcasting station, and the content-accompanying information corresponding to the broadcasting time slot as the content associated information.

The registration unit 341 determines the content identification information for identifying the content based on the content associated information. The content identification information is information for identifying content, and, for example, may be a content name, a content genre (sports, a comedy, a drama, a movie, or the like), a content ID, or the like. That is, the content identification information may be unique information allocated to the content or information generally broadly indicating content.

The search unit 342 searches for posting information corresponding to a received request command based on the request command for requesting the browsing of the posting information received from the mobile terminal 1. Specifically, the search unit 342 searches for the posting information associated with the content associated information including the hashtag by referring to the posting information table 331 based on the hashtag included in the request command. Then, the search unit 342 transmits a search result to the mobile terminal 1. When an operation of requesting the browsing of the posting information has been input to the mobile terminal 1, the request command is a signal to be transmitted from the mobile terminal 1 to the posting information management server 3.

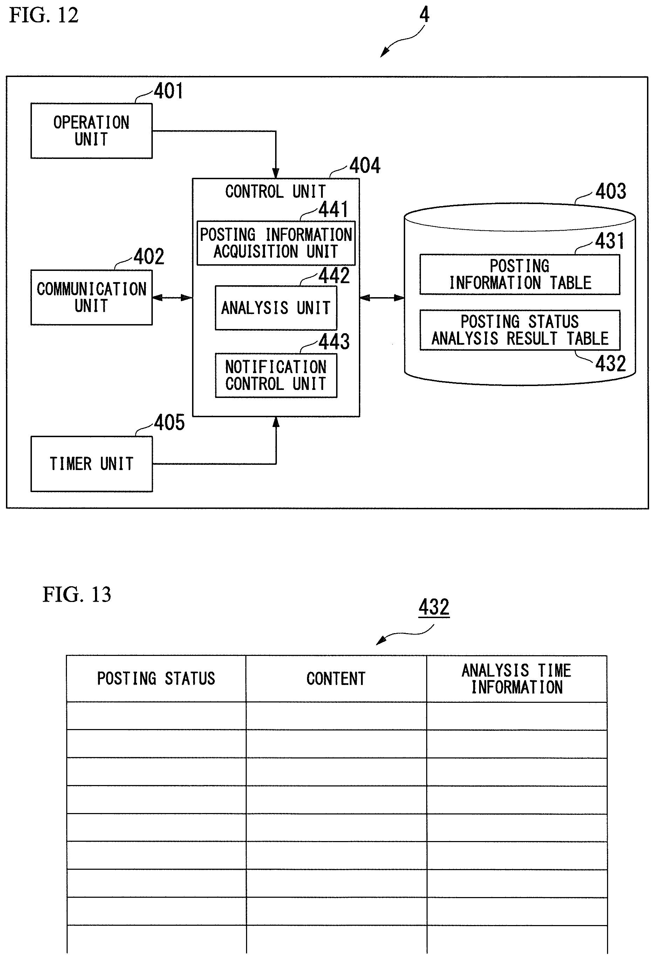

Next, the posting analysis server 4 will be described with reference to FIG. 12. FIG. 12 is a diagram showing an example of a configuration of the posting analysis server 4.

As shown in FIG. 12, the posting analysis server 4 includes an operation unit 401, a communication unit 402, a memory unit 403, a control unit 404, and a timer unit 405.

The operation unit 401 accepts an operation from the manager of the posting analysis server 4 and outputs an operation signal indicating the accepted operation.

The communication unit 402 performs transmission and reception of information to and from the mobile terminals 1 and 7 and the posting information management server 3 via the Internet 6 and the wireless communication network 5.

The memory unit 403 stores information associated with a posting information table 431 and a posting status analysis result table 432. Because the posting information table 431, for example, may be a table for storing the same information as that of the posting information table 331 provided in the posting information management server 3, detailed description is omitted here.

FIG. 13 is a diagram showing an example of the posting status analysis result table 432.

This posting status analysis result table 432 is a table in which a posting status, content, and analysis time information are associated and information is stored.

The posting status is information indicating the posting status which is an analysis result analyzed by the control unit 404.

The content is information indicating content obtained by analyzing the posting status.

The analysis time information is information indicating a posting period of posting information used for analysis.

Returning to FIG. 12, the description of each configuration of the posting analysis server 4 will continue.

The control unit 404 is a CPU and includes a functional configuration unit which reads various types of information stored in the memory unit 403, generally controls the posting analysis server 4, and functions in accordance with processing details. This control unit 404 includes a posting information acquisition unit 441, an analysis unit 442, and a notification control unit 443 as functional configuration units.

The posting information acquisition unit 441 acquires posting information from the posting information management server 3. The posting information acquisition unit 441 may acquire the poster ID, the posting time information, the type of posting information, the content associated information, and the content identification information associated with the posting information from the posting information management server 3 along with the posting information. The posting information acquisition unit 441 associates the information acquired from the posting information management server 3 and writes the information to the posting information table 431 of the memory unit 403.

In this exemplary embodiment, the posting information acquisition unit 441 periodically acquires the posting information from the posting information management server 3. For example, every time a time specified in advance has elapsed, the posting information acquisition unit 441 may transmit the request command for requesting the transmission of the updated posting information to the posting information management server 3. The posting information acquisition unit 441, for example, may request the transmission of all posting information posted within the last 10 minutes among the posting information registered in the posting information management server 3. The posting information acquisition unit 441 may request the transmission of the posting information associated with the content associated information specified in advance among the posting information posted within the last 10 minutes for every piece of content. The posting information acquisition unit 441 may request the transmission of the posting information posted from a specific poster for every piece of attribute information of the poster.

The analysis unit 442 analyzes the posting status based on the posting information acquired by the posting information acquisition unit 441. The analysis unit 442, for example, may perform analysis according to a notification condition referred to by the notification control unit 443.

In this exemplary embodiment, for example, first to third notification conditions to be described hereinafter are specified as the notification condition and each notification condition may be registered in the memory unit 403.

The first notification condition is a condition indicating that the content is trending, and is that the number of postings of the posting information related to content posted per unit time be greater than or equal to a threshold value specified in advance.

The second notification condition is a condition indicating that the content is trending, and is that a change rate of the number of postings of the posting information related to content posted per unit time be greater than or equal to a threshold value specified in advance.

The third notification condition is a condition indicating that the content is trending, and is that the cumulative number of postings of the posting information related to content posted from a broadcasting start time (or reproduction start time point) of the content to a current time (or reproduction time point) be greater than or equal to a threshold value specified in advance.

This analysis unit 442 analyzes the posting status on a reproduction time axis of the content based on the posting time information. The posting status on the reproduction time axis of the content is a posting status when a time at which the posting information posted in relation to the content is posted is positioned on the reproduction time axis of the content. The reproduction start time point of the content is a point of 0 minutes on the reproduction time axis. A time point of "content reproduction time = 40 minutes" is a point of 40 minutes on the reproduction time axis. The posting timing on the reproduction time axis may be indicated by a posted absolute time or indicated by a relative elapsed time from a reproduction start point of the content.

When a process of referring to the first notification condition is predetermined by the notification control unit 443, the analysis unit 442 calculates the number of postings per unit time for every piece of content. For example, the analysis unit 442 may count the number of pieces of the posting information posted in a period until a unit time specified in advance before (for example, 10 minutes before) the current time among the posting information associated with the content associated information indicating the same channel number.

When a process in which the notification control unit 443 refers to the second notification condition is predetermined, the analysis unit 442 may perform the following calculation. That is, the analysis unit 442 calculates the number of postings per unit time for every piece of content and calculates a change rate for the previously calculated number of postings per unit time. For example, the analysis unit 442 counts the number of pieces of posted posting information in a period until a unit time has elapsed from a time (2:50) earlier than the current time (3:00) by the unit time (for example, 10 minutes) specified in advance among posting information associated with content associated information indicating the same channel number. Then, the analysis unit 442 calculates the change rate based on the previously counted number of postings (that is, the number of postings of the posting information posted between 2:40 and 2:49) and the current number of postings (that is, the number of postings of the posting information posted between 2:50 and 2:59).

When referring to the third notification condition is predetermined by the notification control unit 443, the analysis unit 442 calculates the cumulative number of postings of the posting information related to content posted from the broadcasting start time of the content. For example, the analysis unit 442 may count the number of pieces of the posting information posted from the broadcasting start time (2:00) to the current time (3:00) among the posting information associated with the content associated information indicating the same channel number.

The notification control unit 443 determines whether the posting status of the posting information associated with the content among the posting information posted on WEB satisfies the notification condition specified in advance. When the posting status satisfies the notification condition, the notification control unit 443 causes the notification unit 109 of the mobile terminal 1 to output the posting status.

In this exemplary embodiment, the notification control unit 443 determines whether the posting status satisfies the notification condition based on the posting status analyzed by the analysis unit 442.

For example, when referring to the first notification condition is predetermined, the notification control unit 443 may determine whether the number of postings per unit time for every piece of content calculated by the analysis unit 442 is greater than or equal to a threshold value specified in advance. When the number of postings is greater than or equal to the threshold value, the notification control unit 443 determines that the posting status satisfies the first notification condition.

When referring to the second notification condition is predetermined, the notification control unit 443 determines whether the change rate for every piece of content calculated by the analysis unit 442 is greater than or equal to a threshold value specified in advance. When the change rate is greater than or equal to the threshold value, the notification control unit 443 determines that the posting status satisfies the second notification condition.

When referring to the third notification condition is predetermined, the notification control unit 443 determines whether the total number of postings accumulated from the broadcasting start time for every piece of content calculated by the analysis unit 442 is greater than or equal to a threshold value specified in advance. When the total number of postings is greater than or equal to the threshold value, the notification control unit 443 determines that the posting status satisfies the third notification condition.

When the notification condition is satisfied, the notification control unit 443 generates posting status information indicating that a notification of the posting status is provided and transmits the posting status information to the mobile terminal 1 via the communication unit 402. The notification control unit 443 may generate a command for providing a notification indicating that the posting status is that the posting is trending as the posting status information. The notification control unit 443 may generate a command for providing a notification of whether the posting status satisfies at least any one of the first to third notification conditions.

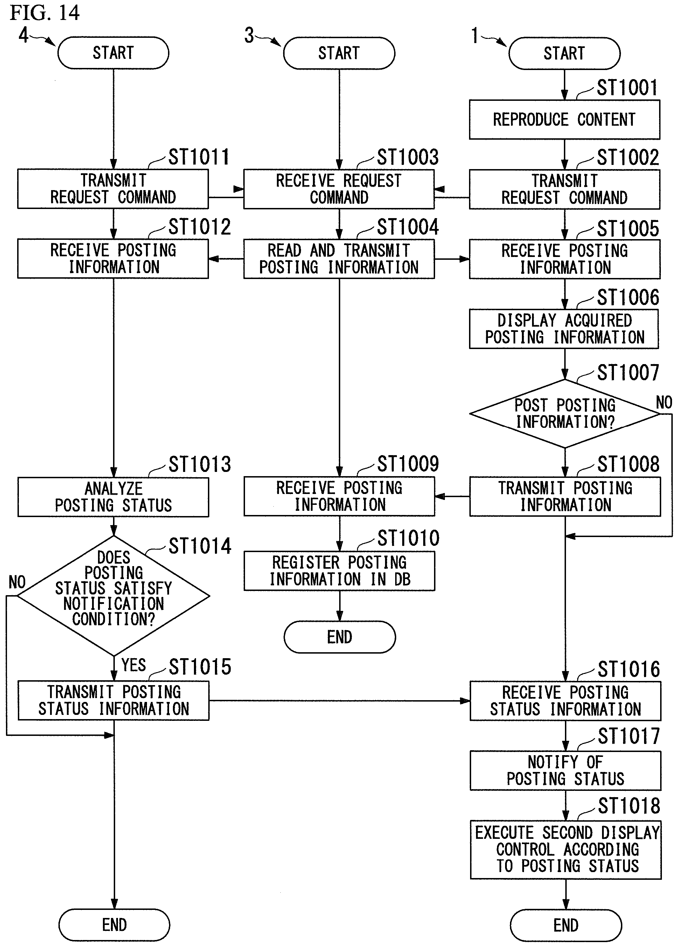

Next, an example of a processing flow in the posting system 1 according to this exemplary embodiment will be described with reference to FIG. 14. FIG. 14 is a flowchart showing an example of a posting information display control method according to this exemplary embodiment.

### (Step ST1001)

For example, the distribution control unit 242 of the content distribution server 2 determines whether the current time measured by the timer unit 205 has reached a start time of a broadcasting time slot of content by referring to the content data table 231 of the memory unit 203. When the current time has reached the start time of the broadcasting time slot of the content or when a time earlier than the current time by a preparation time specified in advance has been reached, the distribution control unit 242 reads content data of the content from the content data memory region 232 of the memory unit 203 and outputs the data to the communication unit 202. The communication unit 202 transmits an analog signal of the content data of which the input has been accepted to the transmission antenna 8. The transmission antenna 8 transmits radio waves on which the received analog signal of the content data is superimposed.

For example, when the reproduction of the content of a station A currently being broadcast via the touch panel 101 is indicated, the mobile terminal 1 may reproduce the data by receiving the content data of the content of the designated station A from the content distribution server 2.

More specifically, the antenna 105 of the mobile terminal 1 receives radio waves transmitted from the transmission antenna 8 and outputs an analog signal of the received radio waves to the television broadcasting receiving unit 106. The television broadcasting receiving unit 106 converts the received analog signal into a digital signal and outputs the digital signal of the content data to the output control unit 122 and the display control unit 126 via the broadcasting data control unit 123. The mobile terminal 1 may receive radio waves of content data of the station A or extract content data of the station A from the received radio waves.

The display control unit 126 causes the display 104 to reproduce an image of content based on the input content data of the station A. When an audio is included in the content, the output control unit 122 causes the speaker 191 to reproduce the audio of the content. Thereby, the mobile terminal 1 can reproduce the content broadcast by the station A at the current time.

The case in which the simultaneous display mode is set in the mobile terminal 1 will be described. In this case, the mobile terminal 1 displays an image of content broadcast by the station A at the current time on the content display region 1041 of the display 104.

### (Step ST1002)

The display control unit 126 of the mobile terminal 1 transmits a request command for requesting the transmission of posting information to the posting information management server 3 via the communication unit 107. Here, the display control unit 126 requests the transmission of the posting information related to the content displayed on the display 104 in step ST1001. For example, the display control unit 126 may transmit a hashtag (#stationA) for identifying the content displayed on the display 104 to the posting information management server 3 via the communication unit 107 along with the request command. In addition, the communication unit 107 associates the terminal ID (or poster ID) allocated to the mobile terminal 1 with the posting information and transmits the information to the posting information management server 3.

### (Step ST1003)

The communication unit 302 of the posting information management server 3 receives the request command from the mobile terminal 1.

### (Step ST1004)

When the request command is received, the search unit 342 of the control unit 304 of the posting information management server 3 reads the requested posting information from the memory unit 303 and transmits the read posting information to the mobile terminal 1 via the communication unit 302. For example, the search unit 342 may search for and read the posting information associated with the hashtag (#stationA) by referring to the posting information table 331 of the memory unit 303.

The search unit 342 may identify the content by referring to the broadcasting time slot of the content and the current time when the content is specified based on the hashtag (#stationA). The communication unit 302 transmits all posting information obtained by the search of the search unit 342 to the mobile terminal 1 indicated by a terminal ID (or poster ID) associated with the request command. When the posting information associated with the hashtag (#stationA) has been obtained through the search, the search unit 342 reads a poster ID, posting time information, and a type of posting information associated with the posting information obtained through the search in the posting information table 331, and associates the read poster ID, posting time information, posting information, and posting information type to transmit the information to the mobile terminal 1.

The exemplary embodiment of the present invention is not limited thereto. The search unit 342 may search for other content associated information indicating the same content based on the hashtag (#stationA) and acquire all posting information associated with the other content associated information obtained through the search as the posting information requested by the request command. For example, it is assumed that the hashtag (#stationA) and the other information (a hashtag such as #A or #soccer, a keyword such as a station A, soccer, or A, a channel number of the station A, a content ID, or the like) indicating the content are associated and pre-registered in the memory unit 303 as the information indicating the same content. In this case, the search unit 342 can acquire all the posting information associated with the content associated information including at least one of the #stationA, soccer, and #soccer by referring to the posting information table 331.

### (Step ST1005)

The display control unit 126 of the control unit 102 of the mobile terminal 1 receives the posting information from the posting information management server 3 via the communication unit 107. The mobile terminal 1 associates the information received from the posting information management server 3, for example, a poster ID, posting time information, posting information, and a type of posting information, and temporarily saves the information in the memory unit 103.

### (Step ST1006)

The display control unit 126 causes the posting information received from the posting information management server 3 to be displayed on the posting information display region 1042 of the display 104.

Thereby, the content and the posting information are simultaneously displayed on the display 104.

As shown in FIG. 2, the mobile terminal 1 periodically transmits the request command, acquires the posting information from the posting information management server 3, and displays the posting information on the posting information display region 1042 of the display 104.

The display control unit 126 executes corresponding control between first display control for controlling a display form of the posting information display region 1042 according to the content displayed on the display 104 and second display control for controlling a display form of the content display region 1041 according to the posting information displayed on the display 104.

### (Step ST1007)

The mobile terminal 1 is in a state in which an indication of a posting of the posting information input via the posting information display region 1042 of the display 104 can be accepted based on the detection result of the touch panel 101.

### (Step ST1008)

When the posting of the posting information has been indicated, the posting unit 125 of the control unit 102 of the mobile terminal 1 transmits information obtained by associating the terminal ID or poster ID with the input posting information to the posting information management server 3 via the communication unit 107. In this case, the posting unit 125, for example, may transmit posting information including content associated information indicating content displayed on the content display region 1041 of the display 104 to the posting information management server 3. In this exemplary embodiment, the posting unit 125 transmits the posting information including the hashtag (#stationA) to the posting information management server 3.

### (Step ST1009)

The registration unit 314 of the control unit 304 of the posting information management server 3 receives the posting information from the mobile terminal 1 via the communication unit 302.

### (Step ST1010)

The registration unit 341 associates the terminal ID (or poster ID) and the content associated information associated with the posting information based on the information received from the mobile terminal 1 and writes the information to the posting information table 331 of the memory unit 303. In this exemplary embodiment, the registration unit 341 acquires the hashtag (#stationA) as the content associated information from the posting information and associates the hashtag (#stationA) and the posting information to write the information to the posting information table 331.

In addition, the registration unit 341 associates the posting time information with the posting information to write the information to the posting information table 331. When the posting time at which the posting information has been posted is measured by the mobile terminal 1 and assigned, the registration unit 341 associates the posting time as the posting time information with the posting information and writes the information to the posting information table 331. On the other hand, when the posting time is not assigned to the posting information, the registration unit 341 associates the posting time at which the posting information has been received as the posting time information with the posting information to write the information to the posting information table 331.

### (Step ST1011)

The posting analysis server 4 periodically acquires the posting information from the posting information management server 3.

For example, every time a time specified in advance has elapsed, the posting information acquisition unit 441 of the posting analysis server 4 may transmit a request command for requesting the transmission of the updated posting information to the posting information management server 3 via the communication unit 402.

### (Step ST1003)

The search unit 342 of the control unit 304 of the posting information management server 3 receives a request command via the communication unit 302.

### (Step ST1004)

When the request command is received, the search unit 342 of the control unit 304 of the posting information management server 3 reads the requested posting information from the memory unit 303 and transmits the posting information to the posting analysis server 4 via the communication unit 302. For example, the search unit 342 searches for and reads the posting information associated with the hashtag (#stationA) by referring to the posting information table 331 of the memory unit 303. When the content is specified based on the hashtag (#stationA), the search unit 342 may identify the content by referring to the broadcasting time slot and the current time of the content. When the posting information associated with the hashtag (#stationA) has been obtained through the search, the search unit 342 reads a poster ID, posting time information, and a type of posting information associated with the posting information obtained through the search from the posting information table 331. The communication unit 302 associates all the posting information obtained through the search of the search unit 342 and the poster ID and the posting time information associated with the posting information to transmit the information to the posting analysis server 4.

### (Step ST1012)

The posting information acquisition unit 441 of the control unit 404 of the posting analysis server 4 receives the posting information from the posting information management server 3 via the communication unit 402. The posting information acquisition unit 441 associates the information received from the posting information management server 3, for example, a poster ID, posting time information, posting information, and a type of posting information, and saves the information in the posting information table 431 of the memory unit 403.

### (Step ST1013)

The analysis unit 442 of the control unit 404 of the posting analysis server 4 analyzes the posting status based on the posting information acquired by the posting information acquisition unit 441. The analysis unit 442, for example, may analyze the posting status for every piece of currently broadcast content.

### (Step ST1014)

The notification control unit 443 of the control unit 404 of the posting analysis server 4 determines whether the posting status satisfies a notification condition based on the posting status analyzed by the analysis unit 442. The notification control unit 443, for example, may determine whether the posting status satisfies the notification condition for every piece of currently broadcast content.

### (Step ST1015)

The notification control unit 443 generates posting status information indicating a notification of the posting status of content when there is content of which the posting status satisfies the notification condition, and transmits the posting status information to the mobile terminal 1 via the communication unit 402. As a specific example, the case in which the notification control unit 443 determines that the content of the station B satisfies a first notification condition will be described. In this case, the notification control unit 443 generates the posting status information indicating that the posting status for content currently being broadcast by the station B satisfies the first notification condition. Then, the communication unit 402 transmits the posting status information generated by the notification control unit 443 to the mobile terminal 1.

### (Step ST1016)

The communication unit 107 of the mobile terminal 1 receives the posting status information from the posting analysis server 4 and outputs the posting status information to the output control unit 122 and the display control unit 126 of the control unit 102.

### (Step ST1017)

Based on the input posting status information, the output control unit 122 and the display control unit 126 determine a notification manner by the notification unit 109. In accordance with the notification manner according to a posting status, the output control unit 122 and the display control unit 126 may cause the speaker 191 to output a determined audio, cause the light emitting unit 192 to turn light of a determined color on or off, or vibrate the vibration unit 193 in a determined vibration pattern.

### (Step ST1018)

Based on the input posting status information, the display control unit 126 executes the second display control for controlling a display form of the content display region 1041 according to the posting status of the posting information displayed on the display 104.

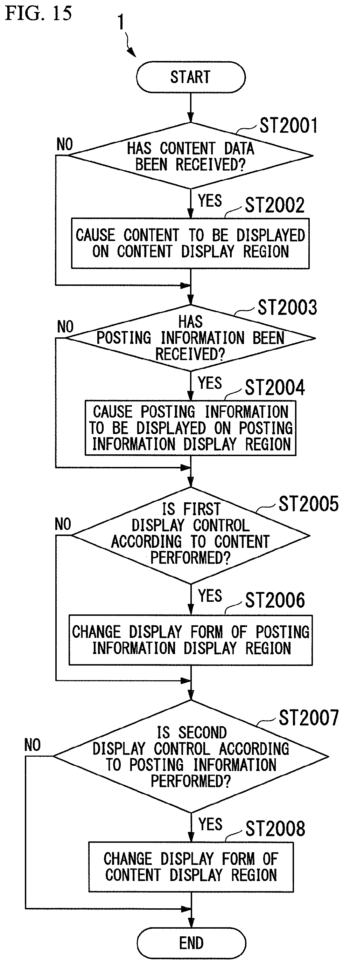

Next, an example of a display control method according to this exemplary embodiment will be described with reference to FIG. 15. FIG. 15 shows the example of the display control method according to this exemplary embodiment.

### (Step ST2001)

When the power supply is turned ON and an instruction for displaying the content display region 1041 on the display 104 is input via the touch panel 101, the mobile terminal 1 becomes a state of being capable of receiving content from the content distribution server 2 via the communication unit 107.

### (Step ST2002)

When content data is received via the communication unit 107, the display control unit 126 causes the content to be displayed on the content display region 1041 based on the received content data.

### (Step ST2003)

When the instruction for displaying the posting information display region 1042 on the display 104 is input via the touch panel 101, the mobile terminal 1 becomes a state of being capable of receiving the posting information from the posting information management server 3 via the communication unit 107.

### (Step ST2004)

When the posting information is received via the communication unit 107, the display control unit 126 causes the received posting information to be displayed on the posting information display region 1042.

Thereby, the content display region 1041 and the posting information management server 3 are displayed in parallel on the display 104.

### (Step ST2005)

The display control unit 126 determines whether to execute the first display control for controlling the display form of the posting information display region 1042 according to content displayed on the content display region 1041. Specifically, the display control unit 126 determines whether conditions specified in the control modes '11' to '19' are satisfied.

### (Step ST2006)

When it is determined that the conditions specified in the control modes '11' to '19' are satisfied, the display control unit 126 controls the display of the posting information display region 1042 according to the control modes '11' to '19' which satisfy the conditions.

### (Step ST2007)

The display control unit 126 determines whether to execute the second display control for controlling the display form of the content display region 1041 according to posting information displayed on the posting information display region 1042. Specifically, the display control unit 126 determines whether conditions specified in the control modes '21' to '25' are satisfied.

### (Step ST2008)

When it is determined that the conditions specified in the control modes '21' to '25' are satisfied, the display control unit 126 controls the display of the content display region 1041 according to the control modes '21' to '25' which satisfy the conditions.

As a posting status notification method, various methods are applicable. It is only necessary for the mobile terminal 1 to at least provide a notification indicating that there is content in a posting status of which the notification is required to be provided, that is, that there is content of which the posting is trending. The mobile terminal 1 may specify content of which the posting is trending and provide a notification of a degree to which the posting is trending so that the posting status indicates how big of a trend the posting is.

As a specific example, the case in which there is a trending program other than a program currently being reproduced by the mobile terminal 1 (a so-called competing program in the same time slot on a different channel) among programs currently being reproduced will be described. In this case, the mobile terminal 1 provides a notification indicating that there is a competing program in the same time slot on a different channel that is trending based on the posting status information. The mobile terminal 1, for example, may audio an alarm, turn a light on or off, and generate vibration. In addition, the mobile terminal 1 may cause the display 104 to display a trending program name or channel number.

When a channel is desired to be changed to the competing program displayed on the display 104, the user brings his or her finger in contact with or in proximity to a display portion of a program name or a channel number displayed on the display 104. The touch panel 101 detects a touch operation and the control unit 102 accepts an operation of making a change to a channel for the competing program designated by the touch operation. The mobile terminal 1 receives content data of the designated program from the content distribution server 2 to cause the data to be displayed on the content display region 1041 of the display 104.

Thereby, the mobile terminal 1 can simply provide a notification of content of which the posting status is that the content is trending to the user and reproduce the trending content based on the user's instruction.

While the mobile terminal 1 causes the display 104 to display a trending program name or channel number, the user can change the channel at an arbitrary timing.

When the posting status information has been received, the mobile terminal 1 may automatically reproduce content of which the posting is trending. Thereby, the user can immediately view and browse the content of which the posting is trending.

As a specific example, the case in which content other than content of which the posting is trending most is already reproduced will be described. In this case, the output control unit 122 and the display control unit 126 of the mobile terminal 1 receive content data of the content of which the posting is trending most from the content distribution server 2 based on the posting status information and switch the content displayed on the display 104 to the content of which the posting is trending most.

When only the posting information has been displayed on the display 104, the output control unit 122 and the display control unit 126 of the mobile terminal 1 switch a display mode of the display 104 from a single display mode to a simultaneous display mode. Then, the output control unit 122 and the display control unit 126 of the mobile terminal 1 receive the content data of the content of which the posting is trending most based on the posting status information from the content distribution server 2 and cause the data to be displayed on the content display region 1041 of the display 104.

The mobile terminal 1 may accept a reproduction instruction for content according to the posting status in the standby state or the lock state. The mobile terminal 1 may automatically reproduce the content without accepting the content reproduction instruction in the standby state or the lock state.

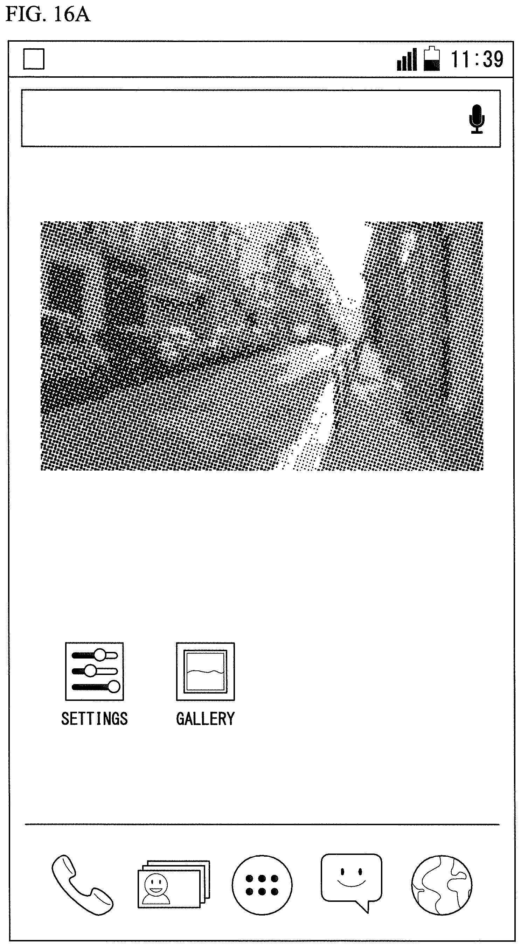

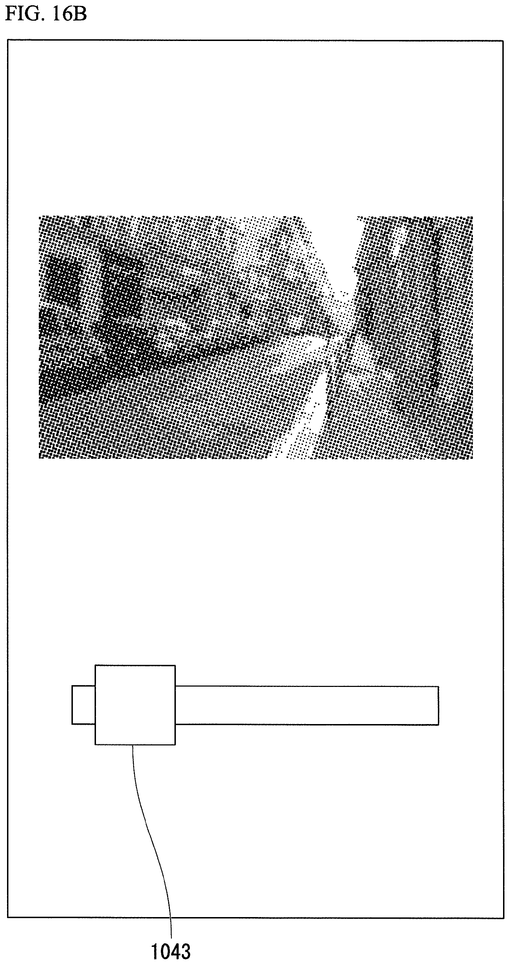

FIGS. 16A and 16B are explanatory diagrams showing an example in which the mobile terminal 1 automatically reproduces the content according to the posting status in the standby state or the lock state.

FIG. 16A shows the example in which the mobile terminal 1 automatically reproduces the content according to the posting status in the standby state or the lock state. As shown in FIG. 16A, the mobile terminal 1 may display the content on part of the display 104 in the standby state. Although not shown, the mobile terminal 1 may display the content on the overall surface of the display 104.

FIG. 16B shows the example in which the content according to the posting status is automatically reproduced in the lock state of the mobile terminal 1. As shown in FIG. 16B, the mobile terminal 1 may display the content on part of the display 104 in the lock state. In this case, the mobile terminal 1 may display an operation button 1043 for accepting a release operation of releasing the lock state on the display 104.

Thereby, it is possible to provide an opportunity to immediately view content and provide an opportunity to view content of viewing information of a specific period that is attracting the most attention and regarded to have high importance. In other words, it is possible to make a viewing state without missing an opportunity to perform viewing in a specific period.

The exemplary embodiment of the present invention is not limited to the above-described configuration. When the posting status has been output from the display 104 or the notification unit 109 in the lock state in which an operation input for the mobile terminal 1 is limited, the operation details determination unit 121 of the control unit 102 of the mobile terminal 1 may release at least a limit of the operation of instructing to reproduce content of the posting status.

Through this configuration, the mobile terminal 1 can accept the operation of instructing to reproduce content of the posting status when the notification of the posting status has been provided from the display 104 or the notification unit 109 even in the lock state in which the operation input is limited. Consequently, the user can view and browse the content by inputting the operation of instructing to reproduce the content of which the notification has been provided without performing an operation of releasing the lock state of the mobile terminal 1. In addition, in a state in which the content is reproduced, the mobile terminal 1 maintains the lock state. Thus, during content reproduction, it is possible to prevent a malfunction by an erroneous operation input.

The exemplary embodiment of the present invention is not limited to the above-described configuration. In the lock state in which the operation input for the mobile terminal 1 is limited, the operation details determination unit 121 of the control unit 102 of the mobile terminal 1 may be configured as follows when the posting status has been output from the display 104 or the notification unit 109. That is, the operation details determination unit 121 may simultaneously accept a lock release instruction and a content reproduction instruction at least when the limit of the operation of instructing to reproduce the content of the posting status has been released. In other words, after the notification of the posting status is provided in the lock state, the mobile terminal 1 reproduces the indicated content and releases the lock state when the reproduction instruction of the content is accepted. In this manner, operability is improved by setting the operation of the content reproduction instruction and the operation of the release instruction of the lock state as the same operation.

When the operation details determination unit 121 is not configured as described above, it is necessary to perform an operation of instructing to reproduce content after the lock state is released. Thus, it is difficult to immediately move from the lock state to the content reproduction state. Thus, the operability is poor and reproduction timing of the content is shifted. As a result, there is a possibility that the content may be temporarily missed in some cases.

In the display notification of the posting information, the mobile terminal 1 can display content associated information mainly having text information of broadcasting content in the lock state. The content associated information, for example, may be related to content corresponding to the posting information posted for the content determined to be trending most. In this case, if a contact indication by a finger or input device is made for content associated information displayed in a predetermined region specified on the touch panel 101, the mobile terminal 1 may release the lock state and perform an automatic display of target content based on identification information included in the content associated information. Thereby, the simplicity of a process of the user viewing text information or the like until the related content is reproduced and viewed can be promoted.

As another configuration, it is also possible to display content during broadcasting as a video or a still image on a predetermined region on an unlock screen displayed on the display 104 of the mobile terminal 1 of the lock state. Thereby, for example, content is automatically viewable if necessary even in a state in which the mobile terminal 1 is allowed to stand on a desk. Thus, it is possible for the user to receive content service use in which he or she does not miss any scenes attracting a high degree of attention in content.

In the case where the display notification is provided, in order for the posting information to be able to be created immediately, if there is any operation for a display notification, an opportunity to move to the unlock state without performing unlocking for the terminal and create the posting information may be generated according to the operation.

The case in which the mobile terminal 1 automatically reproduces the trending content according to the posting status will be described. In this case, the mobile terminal 1 may start reproduction rapidly after the posting status information is received. The mobile terminal 1 may start the reproduction after the passage of a predetermined period from the reception of the posting status information.

As another method, the mobile terminal 1 may reproduce the trending content at the timing at which the reproduction instruction has been issued from the user after the reception of the posting information. The mobile terminal 1 may perform video recording (audio recording) on the trending content and reproduce content after the video recording (audio recording) at the timing at which the reproduction instruction has been issued by the user. Thereby, the user can shift the timing at which the reproduction starts in a status in which it is difficult to focus on content viewing such as a state in which he or she is performing another task. In addition, reproducing content without warning may also be a problem when the user is on a train or a public facility. In this case, the user can decide the reproduction timing.

Thus, the content reproduction process is not limited to only a real-time viewing process of activating a content reproduction function and reproducing content data acquired from the content distribution server 2. When the user desires to view content at his or her convenience (that is, when the user desires to avoid the immediate reproduction), the content reproduction process may be performed as follows. That is, when the user has selected viewing at his or her convenience, the control unit 102 of the mobile terminal 1 instructs the content distribution server 2 or the memory unit 103 of the mobile terminal 1 to accumulate broadcasting content. Thereafter, it is possible to reproduce the accumulated content data at the user's convenience. The user can arbitrarily select either one of two viewing forms of the real-time viewing and the viewing at his or her convenience.

In the case of the real-time viewing, the control unit 102 of the mobile terminal 1, for example, may decide the content that is trending most as content to be reproduced based on the acquired posting status information when the content reproduction function has been activated by the user. If the mobile terminal 1 is in a setting state in which an audio is automatically permitted to be output, the control unit 102 may cause the speaker 191 to output only the audio of the trending content as a method of providing a notification of the posting status.

Thereby, the user can clearly perceive details of the trending content by audio. In addition, the control unit 102 of the mobile terminal 1 causes the speaker 191 to output only the audio of the content and causes the display 104 to display an operation screen for designating whether to start the reproduction of an image of content. When an instruction for reproducing an image of content has been accepted via the touch panel 101, the control unit 102 causes the image of the designated content to be displayed on the display 104.

In the case of viewing at the user's convenience, the mobile terminal 1, for example, may transmit a command for instructing to perform video recording of the content that is trending most based on the acquired posting status to the content distribution server 2. The content distribution server 2 records content for which a video recording instruction has been issued among content being broadcast based on the received command. The content distribution server 2 distributes the recorded content to the mobile terminal 1.

Thereby, the mobile terminal 1 can view content distributed in a desired time slot as well as a time slot designated in a time table related to content distribution. In other words, the mobile terminal 1 can reproduce content on which video recording has been automatically performed according to a posting status even for broadcasting content.

A destination in which target content to be automatically recorded according to the posting status is saved is not limited to the content distribution server 2. The destination in which the target content is saved may be another server or the inside of the mobile terminal 1.

A recording capacity of the content distribution server 2 or the like is greater than a memory capacity within the mobile terminal 1. Thus, when the content is recorded to the content distribution server 2 or the like, there is an advantage in that a limit of the recording capacity is small.

When the content is recorded to a memory within the mobile terminal 1, there is an advantage in that viewable content can be reproduced at any time even when a communication environment is bad.

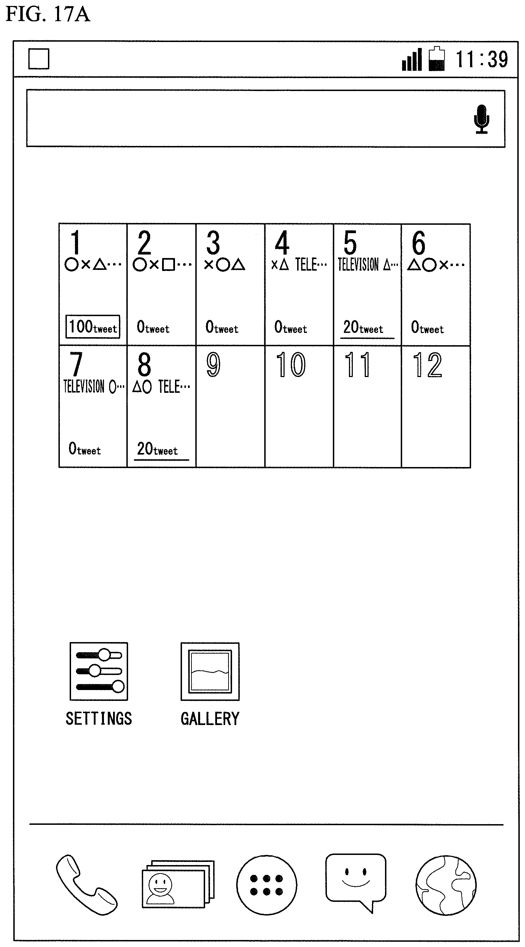

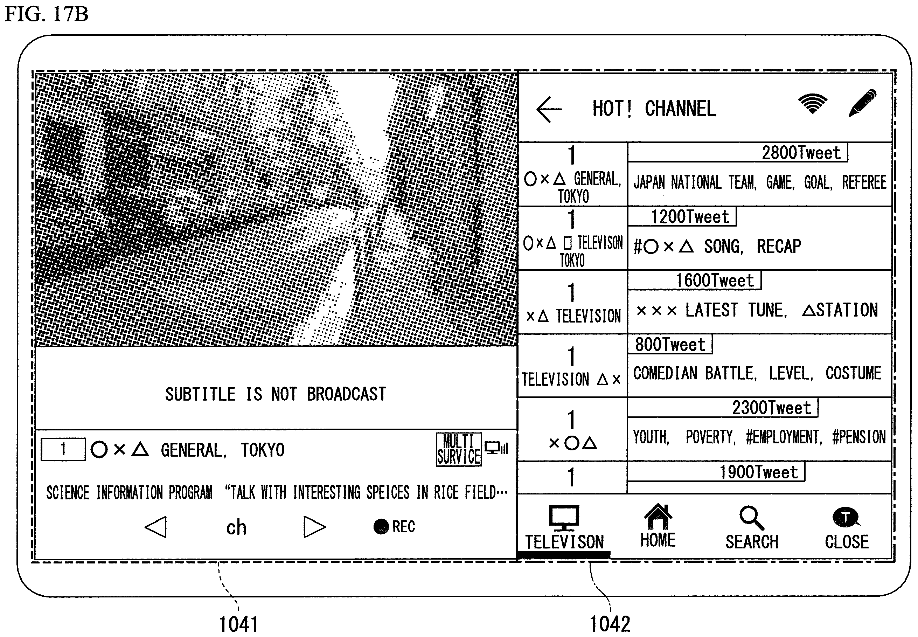

The mobile terminal 1 may display the posting status in the standby state or the lock state. FIGS. 17A and 17B are explanatory diagrams showing an example in which the mobile terminal 1 displays the posting status in the standby state or the lock state.

FIG. 17A shows an example in which the posting status is displayed in the standby state of the mobile terminal 1. As shown in FIG. 17A, the mobile terminal 1 may display the posting status for every piece of broadcasting content currently being broadcast on part of the display 104 in the standby state. Although not shown, the mobile terminal 1 may display the posting status on the overall surface of the display 104. The mobile terminal 1 may display the posting status on a part or all of the display 104 in the lock state.

As described above, the mobile terminal 1 can provide a notification of the posting status according to the set notification method. In the implementation of the notification method, a setting value set by the user may be registered in the mobile terminal 1 and the mobile terminal 1 may execute the notification according to the setting value.

For example, for the notification method, the posting status analyzed by the posting analysis server 4 may be displayed for every piece of content for all content currently being broadcast within a predetermined display region of the display 104 during the standby state of the mobile terminal 1 or during reproduction of the content being distributed. This display example is shown in FIG. 17A. FIG. 17A is a diagram showing an example in which the posting status is displayed for every piece of content being broadcast.

For example, as shown in FIG. 17A, the posting status of content of each channel may be indicated by a mark (bar) indicating the number of postings of the posting information when content of channels CH1 to CH8 is currently being broadcast. More specifically, the mobile terminal 1 receives information indicating the number of postings of the posting information corresponding to content from the posting analysis server 4 as the posting status information. The mobile terminal 1, for example, displays a mark (rectangular frame) indicating the number of postings being 100 in relation to CH1 based on the posting status information. The mobile terminal 1 displays a mark (underline) indicating the number of postings being 20 in relation to CH5. A mark (underline) indicating the number of postings being 20 in relation to CH8 is displayed. The mobile terminal 1 displays a mark (no mark) indicating the number of postings is 0 in relation to CH2 to CH4, CH6, and CH7.

FIG. 17A shows an example in which the posting status of content is displayed when the mobile terminal 1 is in the standby state.

FIG. 17B shows an example in which the posting status of content is displayed on the posting information display region 1042 in the simultaneous display mode in which the mobile terminal 1 simultaneously displays the content and the posting information. When an image shown in FIG. 17B is displayed on the display 104, the mobile terminal 1 accepts a touch operation of indicating a channel number displayed on the posting information display region 1042. When the touch operation indicating the channel number has been detected, the mobile terminal 1 displays content of the indicated channel number on the content display region 1041. When a touch operation of indicating a display of the posting status displayed on the posting information display region 1042 has been detected, the mobile terminal 1 displays the indicated posting information of the content on the posting information display region 1042.

The mobile terminal 1 may acquire content associated information having a high frequency of appearance as posting information related to broadcasting content and display the information on the posting information display region 1042. Thereby, it is possible to simply notify the user of posting information to be posted for every piece of broadcasting content.

The mobile terminal 1 may display a mark (bar) indicating the number of postings of the posting information as shown in FIG. 17A as an indication of a posting status of content of each channel on the posting information display region 1042.

The mobile terminal 1 may display the evaluation of the posting status of content of each channel as a number of stars. More specifically, the mobile terminal 1 may display zero stars as the evaluation on the display 104 when the notification condition is not satisfied. The mobile terminal 1 may display one star as the evaluation on the display 104 when the notification condition is satisfied. When one notification condition among the first to third notification conditions is satisfied, the mobile terminal 1 may display one star on the display 104. The mobile terminal 1 may display two stars on the display 104 when two notification conditions are satisfied. The mobile terminal 1 may display three stars on the display 104 when all the first to third notification conditions are satisfied.

In this manner, the mobile terminal 1 provides a notification of a posting status of specific content during reproduction of content being distributed or even in a state in which there is no opportunity to use any particular function. As a result, it is possible to provide the user with an opportunity to start the reproduction of specific content.

The speaker 191 of the mobile terminal 1 may reproduce the posting status by audio. The light emitting unit 192 of the mobile terminal 1 may illuminate or flash a light indicating a posting status.

Thereby, even in a state in which the mobile terminal 1 is not operated, for example, the standby state, or the lock state, it is possible to provide the user with an opportunity to start the audio notification by the speaker 191, the notification by the light emitting unit 192, and the reproduction of specific content.

Even when the power supply of the mobile terminal 1 is in an OFF state, the mobile terminal 1 can provide the notification of the posting status from the notification unit when the posting status information has been received from the posting analysis server 4. More specifically, the control unit 102 of the mobile terminal 1 can receive the posting status information from the posting analysis server 4 even when the power supply is in the OFF state, that is, the lock state. When the posting status information has been received from the posting analysis server 4, the mobile terminal 1 displays the posting status even when the power supply is in the OFF state. At this time, the mobile terminal 1 may display the posting status and set the power supply of the mobile terminal 1 to the ON state. Thereby, even in a state in which the mobile terminal 1 is not used, it is possible to notify the user of the posting status and encourage the browsing or video recording of the content.

In this manner, when it is determined that the posting status is that the posting is trending, the mobile terminal 1 can notify the user of the posting status by an image, an audio, light, vibration, or the like. The mobile terminal 1, for example, can notify the user that the posting status for a program of the station B is that the program is trending while a program of the station A is reproduced based on the posting status information. Because the user can view and browse the program of the station B through the notification, it is possible to secure an opportunity to view and browse the trending program of the station B. As a result, it is possible to prevent a competing program that is trending from being missed.

In the case of the conventional system, it is difficult for the user to find content of which the posting is trending if the posting status is not browsed even when the posting for the content being broadcast is trending. In addition, there is a problem in that the monitoring load of the user increases if the user performs the browsing of the content in parallel with finding content of which the posting is trending. Further, there is a possibility of the content being missed when it is difficult for the user to find the content of which the posting is trending.

On the other hand, the posting system 100 according to the exemplary embodiment of the present invention can solve these problems by providing a notification of the posting status from the mobile terminal 1 when the posting status satisfies the notification condition.

According to this exemplary embodiment, the mobile terminal 1 can notify the user of the posting status of the trending content even in a state in which no posting information is displayed on the display 104. Thereby, the user can recognize, or obtain an opportunity to recognize, content to which people posting posting information are paying attention or how many postings for content by people viewing (browsing) the content are made even in a state in which the posting information is not browsed.

According to this exemplary embodiment, the mobile terminal 1 can provide a notification of a posting status determined based on a plurality of notification conditions. Thereby, the mobile terminal 1 can notify the user of a posting status analyzed according to how it attracts attention or trends from different points of view for (trending) content that is attracting the most attention at a current time, (trending) content for which the degree of interest suddenly rises, or the like.

According to this exemplary embodiment, when the posting analysis server 4 determines that the posting status satisfies a notification condition, the mobile terminal 1 can reproduce content of which the posting status is determined to satisfy the notification condition, display an image of the content on the display 104, and output an audio of the content from the speaker 191. Thereby, the user can secure an opportunity to view (browse) content of which the posting status is that the content is trending and avoid missing it. Accordingly, the mobile terminal 1 can provide the user with recommended content and the reproduction timing thereof.

According to this exemplary embodiment, in a state (lock state) in which the operation input is limited, the mobile terminal 1 can release the limit of an operation of instructing to reproduce content associated to the posting status when the notification of the posting status from the notification unit 109 has been provided. Consequently, the user can view (browse) content by inputting an operation of instructing to reproduce content for which the notification is provided even without performing an operation of releasing the lock state of the mobile terminal 1. Because the mobile terminal 1 maintains the lock state in a state in which the content is reproduced, it is possible to prevent a malfunction due to an input of an erroneous operation during content reproduction.

When the posting information is received from the posting information management server 3 or the posting analysis server 4, the mobile terminal 1 may receive only posting information associated with content reproduced on the display 104 and display the information on the display 104. As another method, the mobile terminal 1 may receive at least either the content associated information or the content identification information along with the posting information from the posting information management server 3 or the posting analysis server 4. In this case, the mobile terminal 1 may display only the posting information associated with the content reproduced on the display 104 on the display 104 based on the content associated information or the content identification information. Thereby, the mobile terminal 1 can cause the posting information corresponding to the content reproduced on the display 104 to be preferentially displayed.

When the posting unit 125 has accepted the posting of the posting information, the mobile terminal 1 may associate image data of the content displayed on the display 104 with the posting information and transmit the information to the posting information management server 3. The time at which the posting has been accepted may be the time at which an operation of indicating the like button 1045 or the write button 1046 displayed on the display 104 of the mobile terminal 1 has been received or the time at which text or the like input after the operation of indicating the write button 1046 displayed on the display 104 of the mobile terminal 1 is accepted, is transmitted to the posting information management server 3.

### [Second Exemplary Embodiment]

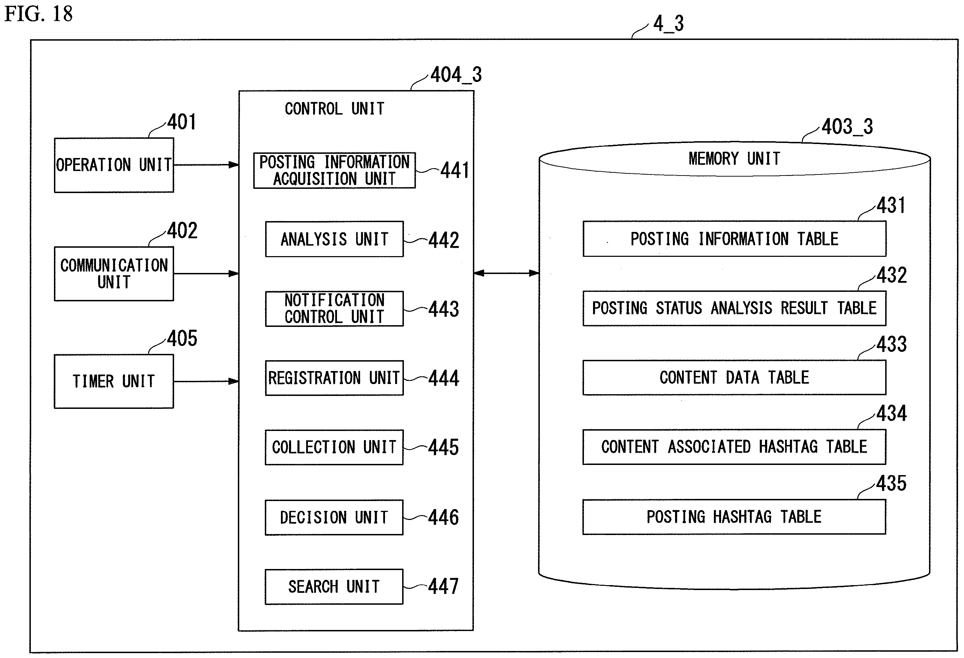

Hereinafter the second exemplary embodiment of the present invention will be described with reference to the drawings. FIG. 18 is a diagram showing an outline of a posting analysis server 4_3 according to the second exemplary embodiment of the present invention. In the posting analysis server 4_3 shown in FIG. 18, the same reference symbols are assigned to constituent elements similar to those of the posting analysis server 4 according to the first exemplary embodiment and detailed description thereof is omitted.

Next, the posting analysis server 4_3 will be described with reference to FIG. 18. FIG. 18 is a diagram showing an example of a configuration of the posting analysis server 4_3.

As shown in FIG. 18, the posting analysis server 4_3 includes an operation unit 401, a communication unit 402, a memory unit 403_3, a control unit 404_3, and a timer unit 405. At least some of functions of the constituent elements provided in the posting analysis server 4_3 may be provided in the mobile terminal 1. For example, the control unit 404_3 of the posting analysis server 4_3 may be provided in the mobile terminal 1.

The memory unit 403_3 includes a posting information table 431, a posting status analysis result table 432, a content data table 433, a content associated hashtag table 434, and a posting hashtag table 435.

Because the configuration of the content data table 433 is similar to the content data table 231, detailed description thereof is omitted.

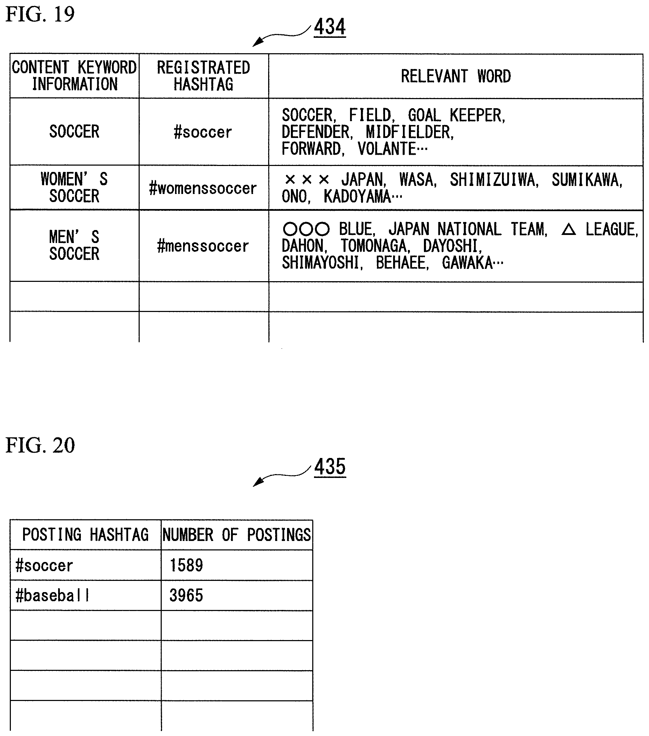

FIG. 19 is a diagram showing an example of the content associated hashtag table 434.

The content associated hashtag table 434 is a table in which content keyword information, information indicating a registrated hashtag, and information indicating a relevant word are associated and each piece of information is stored.

The content keyword information is information included in content-accompanying information stored in the content data table 433. When the content-accompanying information includes a plurality of pieces of content keyword information, each of the plurality of pieces of the content keyword information is stored in a field of one row of the content associated hashtag table 434. That is, in the field of each row of the content associated hashtag table 434, the content keyword information is stored piece by piece.

The registrated hashtag is information in which corresponding content keyword information is indicated by the hashtag.

The relevant word is a keyword related to the content keyword information. The relevant word is a term written to the posting information by a user having interest and concern in the content keyword information.

FIG. 20 is a diagram showing an example of the posting hashtag table 435.

The posting hashtag table 435 is a table in which the information indicating the posting hashtag and the information indicating the number of postings are associated and stored. The posting hashtag table 435 is a table in which the hashtag collected for every posting time slot of the posting information and the number of postings thereof are stored. The posting hashtag is a hashtag included in the posting information posted in a predetermined time slot. FIG. 20 shows a posting hashtag and the number of postings thereof in a posting time slot (broadcasting time slot) of 2012.08.08 19:00 to 20:00.

As shown in FIG. 18, the control unit 404_3 includes a posting information acquisition unit 441, an analysis unit 442, a notification control unit 443, a registration unit 444, a collection unit 445, a decision unit 446, and a search unit 447.

The registration unit 444 receives information associated with each row of the posting information table 331 received from the posting information management server 3 and registers the received information in the posting information table 431 of the memory unit 403_3.

The collection unit 445 collects the posting information stored in the posting information table 431 for every timing specified in advance and calculates the number of postings for every hashtag included in the posting information.

When a collection result has been obtained, the collection unit 445 associates the posting hashtag acquired from the posting information and the number of postings and writes an association result to the posting hashtag table 435.

Based on a hashtag request signal received from the mobile terminal 1, the decision unit 446 decides the hashtag corresponding to the received hashtag request signal. That is, the decision unit 446 decides the hashtag to be displayed on the display 104 of the mobile terminal 1 based on the hashtag request signal. In this exemplary embodiment, the decision unit 446 executes either one of the following two methods or a method obtained by combining the two methods as the hashtag decision method. The decision method to be executed is preset.

The first decision method is a decision method in which the decision unit 446 decides a registration hashtag registered in the content associated hashtag table 434 as a hashtag corresponding to the received hashtag request signal. Hereinafter, the first decision method is referred to as a registration hashtag decision method.

The second decision method is a decision method in which the decision unit 446 decides the posting hashtag registered in the posting information table 431 as the hashtag corresponding to the received hashtag request signal. Hereinafter, the second decision method is referred to as a posting hashtag decision method.

An example of the registrated hashtag decision method will be described.

The decision unit 446 determines whether a content ID is included in a hashtag request signal. More specifically, when the content ID is included in the hashtag request signal, the decision unit 446 acquires content-accompanying information corresponding to the content ID by referring to the content data table 433 of the memory unit 403_3. At this time, the decision unit 446 may acquire content-accompanying information corresponding to both the broadcasting time slot indicated by a date and time at which the hashtag request signal has been received and the content ID included in the hashtag request signal.

In addition, the decision unit 446 acquires a registration hashtag corresponding to content keyword information included in the acquired content-accompanying information by referring to the content associated hashtag table of the memory unit 403_3. The decision unit 446 decides the acquired registration hashtag as a hashtag corresponding to the received hashtag request signal.

An example of a posting hashtag decision method will be described.

As described above, the decision unit 446 acquires content-accompanying information corresponding to a content ID by referring to the content data table 433 of the memory unit 403_3 when the content ID is included in a hashtag request signal.

This decision unit 446 acquires a relevant word corresponding to content keyword information included in the acquired content associated information by referring to the content associated hashtag table 434 of the memory unit 403_3. The decision unit 446 searches for the posting information including the acquired relevant word by referring to the posting information table 431. When the posting information including the acquired relevant word has been obtained through the search, the decision unit 446 acquires the posting hashtag included in the posting information obtained through the search by referring to the posting information table 431. The decision unit 446 decides the acquired posting hashtag as the hashtag corresponding to the received hashtag request signal.

Based on a posting browsing request signal received from the mobile terminal 1, the search unit 447 searches for posting information corresponding to the received posting browsing request signal. More specifically, the search unit 447 searches for the posting information associated with the same content associated information as that of the hashtag included in the posting browsing request signal by referring to the posting information table 431. Then, the search unit 447 transmits a search result to the mobile terminal 1.

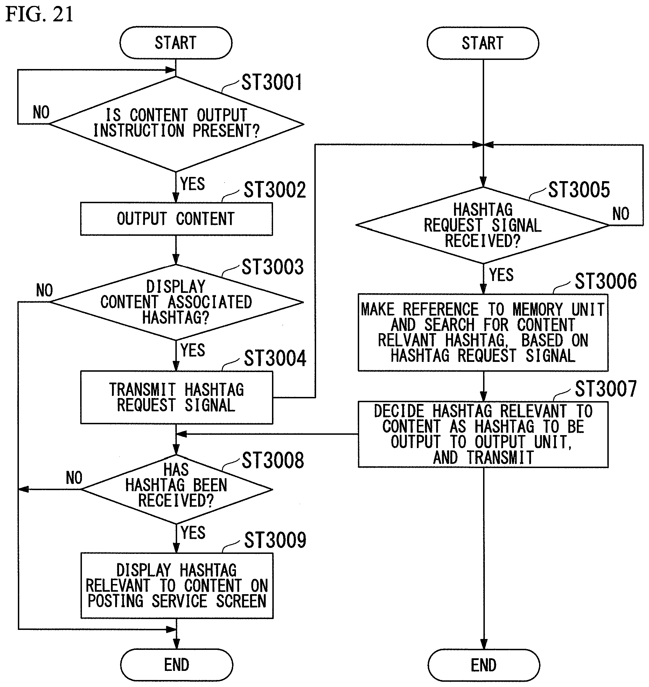

Next, an example of an information processing method in an information processing system according to this exemplary embodiment will be described with reference to FIG. 21. In the flowchart shown in FIG. 21, an example in which the mobile terminal 1 and the posting analysis server 4_3 execute each process in collaboration will be described as one example. However, the exemplary embodiment of the present invention is not limited thereto. When the mobile terminal 1 includes at least some necessary functions among functions of constituent elements provided in the posting analysis server 4_3, the mobile terminal 1 may execute the overall process. In addition, when at least some necessary functions among functions of constituent elements provided in the mobile terminal 1 are provided in the posting analysis server 4_3, the posting analysis server 4_3 may execute the overall process.

The left side of FIG. 21 shows a processing flow of the mobile terminal 1 (steps ST3001 to ST3004, ST3008, and ST3009). The right side of FIG. 21 shows a processing flow of the posting analysis server 4_3 (steps ST3005 to ST3007).

### (Step ST3001)

The operation details determination unit 121 of the control unit 102 of the mobile terminal 1 determines whether a content output instruction has been input to the touch panel 101. For example, when an operation of instructing the display 104 to display a television broadcast has been input, the operation details determination unit 121 determines that the content output instruction for the television broadcast has been input, and outputs a determination result to the output control unit 122 and the display control unit 126. Here, when the content of the displayed television broadcast is currently broadcast content, a channel is designated as an output instruction. When the content of the displayed television broadcast is previously broadcast video-recorded content, the content is designated as the output instruction.

### (Step ST3002)

The output control unit 122 and the display control unit 126 cause the display 104 or the audio signal processing unit 124 to output content based on a determination result accepted from the operation details determination unit 121. The display control unit 126, for example, may cause the display 104 to display an image of a television broadcast based on content data received by the broadcasting data control unit 123 via the television broadcasting receiving unit 106. When an audio is included in content data of a television broadcast and outputting of the audio is set, the output control unit 122 outputs audio data included in the content data to the audio signal processing unit 124 and causes the audio to be output from the speaker 191.

### (Step ST3003)

The display control unit 126 determines whether to cause the display 104 to display a hashtag related to content capable of being output based on operation details accepted by the touch panel 101. In other words, based on the operation details accepted by the touch panel 101, the posting unit 125 determines whether to create a hashtag request signal for requesting the posting analysis server 4_3 to provide a hashtag related to content capable of being output.

In this exemplary embodiment, the timing at which the hashtag related to the content capable of being output is displayed is specified in advance. This timing, for example, may be the timing at which the mobile terminal 1 has accepted an operation from the user instructing the display 104 to simultaneously display the content display screen and the posting screen in a state in which the content display screen is displayed on the display 104.

This display timing, for example, may be the timing at which the mobile terminal 1 has accepted the operation from the user instructing to start a social network service of Twitter (registered trademark) or the like in a state in which the content display screen is displayed on the display 104.

This display timing, for example, may be the timing at which a type of content displayed on the content display screen has been changed in a state in which the content display screen and the posting screen are simultaneously displayed on the display 104.

This display timing may be the timing at which the mobile terminal 1 has accepted an operation from the user posting the posting information in a state in which the content display screen and the posting screen are simultaneously displayed on the display 104.

In addition to the above-described cases, this display timing may be the timing at which the posting of the posting information starts, the timing at which the posting information is input, when the posting information is posted, the timing at which the posting of the posting information ends, and is when a predetermined program for executing these operations is executed in a state in which the content can be displayed on the display 104 or in a state in which the content can be output to the speaker 191.

### (Step ST3004)

When the display control unit 126 determines that a hashtag related to content is displayed, the posting unit 125 creates a hashtag request signal. Further, the posting unit 125 transmits the hashtag request signal to the posting analysis server 4_3 via the communication unit 107.

The posting unit 125 creates the hashtag request signal based on content displayed on the display 104 or content output from the speaker 191.

For example, when the user of the mobile terminal 1 views a soccer broadcast of a broadcasting station A on 2012.08.08 at 19:30, the posting unit 125 creates a hashtag request signal including a content ID "C0001" indicating this program and information indicating a terminal ID indicating the mobile terminal 1 and transmits the signal to the posting analysis server 4_3 via the communication unit 107.

### (Step ST3005)

The posting analysis server 4_3 determines whether the hashtag request signal has been received.

### (Step ST3006)

When the communication unit 402 of the posting analysis server 4_3 has received the hashtag request signal, the decision unit 446 of the control unit 404_3 decides a hashtag corresponding to the received hashtag request signal based on a hashtag request signal.

When the process by the registrated hashtag decision method is set, the decision unit 446 decides the registrated hashtag registered in the content associated hashtag table 434 as a hashtag corresponding to the received hashtag request signal.

More specifically, the decision unit 446 acquires content-accompanying information corresponding to a content ID "C001" included in the hashtag request signal by referring to the content data table 433 of the memory unit 403_3.

Here, it is assumed that the decision unit 446 has acquired "soccer, women's soccer" as the content-accompanying information corresponding to the content ID "C001."

In this case, subsequently, the decision unit 446 acquires a registration hashtag corresponding to the same content keyword information as the content-accompanying information "soccer, women's soccer" by referring to the content associated hashtag table 434. For example, the decision unit 446 acquires the registration hashtag "#soccer" corresponding to the same content keyword information as the content-accompanying information "soccer." The decision unit 446 decides the registration hashtag "#soccer" as the hashtag corresponding to the received hashtag request signal.

When the process by the posting hashtag decision method is set, the decision unit 446 decides content associated information registered in the posting information table 431 as a hashtag corresponding to the received hashtag request signal.

More specifically, the decision unit 446 acquires the content-accompanying information corresponding to a content ID "C001" included in the hashtag request signal by referring to the content data table 433 of the memory unit 403_3.

Here, it is assumed that the decision unit 446 has acquired "soccer, women's soccer" as the content-accompanying information corresponding to the content ID "C001."

In this case, subsequently, the decision unit 446 acquires relevant words corresponding to the same content keyword information as the content-accompanying information "soccer" and "women's soccer" by referring to the content associated hashtag table 434. For example, the decision unit 446 acquires the relevant words "soccer, field, goalkeeper, defender, midfielder, forward, volante..." corresponding to the content-accompanying information "soccer."

Then, the decision unit 446 searches for posting information including one of the acquired relevant words "soccer, field, goalkeeper, defender, midfielder, forward, volante..." by referring to the posting information table 431.

In this exemplary embodiment, posting information associated with the content associated information including the relevant word "soccer" is stored in the posting information table 431. Thus, the decision unit 446 acquires a posting hashtag included in the posting information obtained by the search by referring to the posting information table 431.

The decision unit 446 decides the acquired posting hashtag as the hashtag corresponding to the received hashtag request signal.

### (Step ST3007)

The decision unit 446 decides to output the acquired registrated hashtag or posting hashtag to the output unit of the mobile terminal 1 and transmits the hashtag to the mobile terminal 1 indicated by the terminal ID included in the hashtag request signal.

### (Step ST3008)

The mobile terminal 1 determines whether the hashtag transmitted from the posting analysis server 4_3 has been received.

### (Step ST3009)

The mobile terminal 1 displays the received hashtag on the posting information display region 1042.

In this manner, according to the information processing system according to this exemplary embodiment, the mobile terminal 1 can output the hashtag related to the content from the output unit when it is determined that the hashtag related to the content is displayed in a state in which the content is output.

Thereby, for example, in a state in which the details of the television broadcast are displayed on the display 104 of the mobile terminal 1, it is possible to cause a hashtag according to details of a displayed television broadcast to be displayed when the user issues an instruction to display a posting service display screen such as Twitter (registered trademark), when the posting information is edited, or when a posting history is browsed. In addition, it is possible to cause a hashtag according to details of a television broadcast capable of being displayed such as a competing program to be displayed. Consequently, the user can input a hashtag as the posting information by designating the displayed hashtag without performing his/her own key input for the related hashtag when information about a browsed television broadcast is posted in a state in which the television broadcast is browsed.

In addition, the mobile terminal 1 can also cause a spontaneously generated hashtag to be displayed as an unregistered hashtag according to content by causing the posting hashtag to be displayed on the display 104.

Further, the mobile terminal 1 can cause the posting hashtag having a large number of postings to be preferentially displayed on the display 104. Thereby, it is possible to cause a hashtag frequently used by the user to be displayed and prevent a hashtag with low relativity to content from being displayed.

In general, when a key of the hashtag has been input, there is a possibility of an erroneous input. For this, according to an exemplary embodiment of the present invention, it is possible to prevent an erroneous input of the hashtag because it is only necessary to display a candidate hashtag on the display 104 and designate the displayed hashtag.

Although the configuration in which the touch panel 101 and the display 104 are included in the touch panel 101 has been described in this exemplary embodiment, the exemplary embodiment of the present invention is not limited thereto. For example, the display 104 may be a display in which a touch sensor is not provided and the touch panel 101 may be an operation means such as a mouse, a keyboard, or a button.

In addition, the posting system 100 according to this exemplary embodiment, the mobile terminal 1, the content distribution server 2, the posting information management server 3, and the posting analysis servers 4 and 4_3 may internally have a computer system. The above-described processing may be performed by storing a process of an operation of the system or the like in a computer-readable recording medium in the form of a program and causing the computer system to read and execute the program. The "computer system" used here includes a CPU, various types of memories, an OS, and hardware such as peripheral devices.

The "computer system" also includes a homepage providing environment (or displaying environment) when a WWW system is used.

A process of calculating an estimated value of shape information of a detection target object may be performed by recording a program for implementing each step on a computer-readable recording medium, recording a program for implementing its function on the computer-readable recording medium, and causing a computer system to read and execute the program recorded on the recording medium.

The "computer-readable recording medium" refers to a memory apparatus, including a flexible disk, a magneto-optical disc, a ROM) a writable non-volatile memory such as a flash memory, a portable medium such as a CD-ROM, and a hard disk housed in the computer system.

Furthermore, the "computer-readable recording medium" also includes a medium that holds a program for a constant period of time, such as a volatile memory (e.g., dynamic random access memory (DRAM)) inside a computer system serving as a server or a client when the program is transmitted via a network such as the Internet or a communication circuit such as a telephone circuit.

The above-described program may be transmitted from a computer system storing the program in a memory apparatus or the like via a transmission medium or transmitted to another computer system by transmission waves in a transmission medium. The "transmission medium" for transmitting the program includes a medium having a function of transmitting information, such as a network (communication network) like the Internet or a communication circuit (communication line) like a telephone circuit.

The above-described program may implement some of the above-described functions.

The above-described program may be a program, i.e., a so-called differential file (differential program), capable of implementing the above-described function in combination with a program already recorded on the computer system.

The constituent elements in the above-described exemplary embodiments can be replaced with well-known constituent elements without departing from the scope of the present invention. In addition, the technical scope of the present invention is not limited to the exemplary embodiments described above, and various modifications may be made without departing from the scope of the present invention.

### INDUSTRIAL APPLICABILITY

The present invention is applicable to an information processing device, a posting system, a display control method, and a program.

### Reference Symbols

- 1: Mobile terminal
- 2: Content distribution server
- 3: Posting information management server
- 4: Posting analysis server
- 5: Wireless communication network
- 6: Internet
- 7: Mobile terminal
- 8: Transmission antenna
- 9: Recording medium
- 10: External device
- 101: Touch panel
- 102: Control unit
- 103: Memory unit
- 104: Display
- 105: Antenna
- 106: Television broadcasting receiving unit
- 107: Communication unit
- 108: Timer
- 109: Notification unit
- 121: Operation details determination unit
- 122: Output control unit
- 123: Broadcasting data control unit
- 124: Audio signal processing unit
- 125: Posting unit
- 126: Display control unit
- 191: Speaker
- 192: Light emitting unit
- 193: Vibration unit
- 441: Posting information acquisition unit
- 442: Analysis unit
- 443: Notification control unit

## Claims

1. An information processing device (1) comprising:
a display unit (104) that includes a content display region and a posting information display region provided on the same screen, the display unit (104) being adapted to display content on the content display region and being adapted to display posting information posted on a network on the posting information display region; and
a control unit (102) adapted to execute at least one of first display control and second display control, the first display control controlling a display form of the posting information according to the content displayed on the display unit (104), the second display control controlling a display form of the content according to the posting information displayed on the display unit (104),
**characterized in that**
the control unit (102) is adapted not to display a communication icon in a horizontal display state in which only content display is performed and is adapted to display the communication icon in a vertical display state in which two regions of content display and posting information display are provided, the communication icon representing a communication state of receiving the posting information.

2. The information processing device (1) according to claim 1, wherein the control unit (102) is configured to determine, as the first display control, at least one of luminance and a color tone of the posting information according to at least one of luminance and a color tone of the content.

3. The information processing device (1) according to claim 1 or 2, wherein the control unit (102) is configured to determine, as the first display control, at least one of a character size of the posting information, a character font of the posting information, a scroll speed within the posting information display region, a scroll amount within the posting information display region, an update frequency of the posting information, a display size of the posting information display region, and a display position of the posting information display region within the screen of the display unit (104) according to at least one of a class of a viewer of the content, a type of the content, a screen aspect ratio of the content, and a display size of the content display region.

4. The information processing device (1) according to any one of claims 1 to 3, wherein the control unit (102) is configured to determine, as the first display control, at least one of a character size and a character font of the posting information according to at least one of a character size and a character font displayed in the content.

5. The information processing device (1) according to any one of claims 1 to 4, wherein the control unit (102) is configured to control, as the second display control, a display form of the content display region according to a posting status of the posting information displayed on the posting information display region.

6. The information processing device (1) according to any one of claims 1 to 4, wherein the control unit (102) is configured to limit, as the second display control, a display of content on the content display region according to a class of a poster of the posting information displayed on the posting information display region.

7. A posting system comprising:
the information processing device (1) according to any one of claims 1 to 5; and
a posting information management server (3) adapted to associate posting time information with the posting information and adapted to manage the posting time information and the posting information, the posting time information representing a time at which the posting information was posted from the information processing device (1).

8. A method for controlling a display of a display unit (104), the display unit (104) including a content display region and a posting information display region provided on the same screen, the method comprising the steps of:
displaying content on the content display region;
displaying posting information posted on a network on the posting information display region; and
executing at least one of first display control and a second display control, the first display control controlling a display form of the posting information according to the content displayed on the display unit (104), the second display control controlling a display form of the content according to the posting information displayed on the display unit (104),
**characterized in that**
executing the at least one of the first display control and the second display control includes not displaying a communication icon in a horizontal display state in which only content display is performed and displaying the communication icon in a vertical display state in which two regions of content display and posting information display are provided, the communication icon representing a communication state of receiving the posting information.

9. A computer program comprising instructions that, when executed by a control unit (102) of an information processing device (1) including a display unit (104), carry out the method of claim 8.

## Patentansprüche

1. Informationsverarbeitungsvorrichtung (1) mit:
einer Anzeigeeinheit (104), die einen Inhaltsanzeigebereich und einen Posting-Informationsanzeigebereich aufweist, die auf dem gleichen Bildschirm bereitgestellt werden, wobei die Anzeigeeinheit (104) dazu eingerichtet ist, Inhalt auf dem Inhaltsanzeigebereich anzuzeigen, und dazu eingerichtet ist, auf einem Netzwerk gepostete Information im Posting-Informationsanzeigebereich anzuzeigen; und
einer Steuereinheit (102), die dazu eingerichtet ist, eine erste Anzeigesteuerung und/oder eine zweite Anzeigesteuerung auszuführen, wobei die erste Anzeigesteuerung eine Anzeigeform der Posting-Information gemäß dem auf der Anzeigeeinheit (104) angezeigten Inhalt steuert, und wobei die zweite Anzeigesteuerung eine Anzeigeform des Inhalts gemäß der auf der Anzeigeeinheit (104) angezeigten Posting-Information steuert;
**dadurch gekennzeichnet, dass**
die Steuereinheit (102) dazu eingerichtet ist, in einem horizontalen Anzeigezustand, in dem nur die Inhaltsanzeige ausgeführt wird, kein Kommunikationssymbol anzuzeigen, und dazu eingerichtet ist, das Kommunikationssymbol in einem vertikalen Anzeigezustand anzuzeigen, in dem zwei Bereiche einer Inhaltsanzeige und einer Posting-Informationsanzeige bereitgestellt werden, wobei das Kommunikationssymbol einen Kommunikationszustand des Empfangs der Posting-Information anzeigt.

2. Informationsverarbeitungsvorrichtung (1) nach Anspruch 1, wobei die Steuereinheit (102) dafür konfiguriert ist, als die erste Anzeigesteuerung eine Leuchtdichte und/oder einen Farbton der Posting-Information gemäß der Leuchtdichte und/oder dem Farbton des Inhalts zu bestimmen.

3. Informationsverarbeitungsvorrichtung (1) nach Anspruch 1 oder 2, wobei die Steuereinheit (102) dafür konfiguriert ist, als die erste Anzeigesteuerung mindestens einen Parameter unter einer Zeichengröße der Posting-Information, einer Schriftart der Posting-Information, einer Bildlaufgeschwindigkeit innerhalb des Posting-Informationsanzeigebereichs, einem Bildlaufmaß innerhalb des Posting-Informationsanzeigebereichs, einer Aktualisierungshäufigkeit der Posting-Information, einer Anzeigegröße des Posting-Informationsanzeigebereichs und einer Anzeigeposition des Posting-Informationsanzeigebereichs innerhalb des Bildschirms der Anzeigeeinheit (104) gemäß mindestens einem Parameter unter einer Klasse eines Betrachters des Inhalts, einer Art des Inhalts, einem Bildschirmseitenverhältnis des Inhalts und einer Anzeigegröße des Inhaltsanzeigebereichs zu bestimmen.

4. Informationsverarbeitungsvorrichtung (1) nach einem der Ansprüche 1 bis 3, wobei die Steuereinheit (102) dafür konfiguriert ist, als die erste Anzeigesteuerung eine Zeichengröße und/oder eine Schriftart der Posting-Information gemäß einer Zeichengröße und/oder einer Schriftart zu bestimmen, die im Inhalt angezeigt werden.

5. Informationsverarbeitungsvorrichtung (1) nach einem der Ansprüche 1 bis 4, wobei die Steuereinheit (102) dafür konfiguriert ist, als die zweite Anzeigesteuerung eine Anzeigeform des Inhaltsanzeigebereichs gemäß einem Posting-Zustand der auf dem Posting-Informationsanzeigebereich angezeigten Posting-Information zu steuern.

6. Informationsverarbeitungsvorrichtung (1) nach einem der Ansprüche 1 bis 4, wobei die Steuereinheit (102) dafür konfiguriert ist, als die zweite Anzeigesteuerung eine Anzeige von Inhalt auf dem Inhaltsanzeigebereich gemäß einer Klasse eines Posters der im Posting-Informationsanzeigebereich angezeigten Posting-Information zu begrenzen.

7. Posting-System, mit:
der Informationsverarbeitungsvorrichtung (1) nach einem der Ansprüche 1 bis 5; und
einem Posting-Informationsmanagementserver (3), der dazu eingerichtet ist, Posting-Zeitinformation mit der Posting-Information zu verknüpfen, und dazu eingerichtet ist, die Posting-Zeitinformation und die Posting-Information zu managen, wobei die Posting-Zeitinformation einen Zeitpunkt darstellt, an dem die Posting-Information durch die Informationsverarbeitungsvorrichtung (1) gepostet wurde.

8. Verfahren zum Steuern einer Anzeige einer Anzeigeeinheit (104), wobei die Anzeigeeinheit (104) einen Inhaltsanzeigebereich und einen Posting-Informationsanzeigebereich aufweist, die auf dem gleichen Bildschirm bereitgestellt werden, wobei das Verfahren die Schritte aufweist:
Anzeigen von Inhalt auf dem Inhaltsanzeigebereich;
Anzeigen von auf einem Netzwerk geposteter Posting-Information auf dem Posting-Informationsanzeigebereich; und
Ausführen einer ersten Anzeigesteuerung und/oder einer zweiten Anzeigesteuerung, wobei die erste Anzeigesteuerung eine Anzeigeform der Posting-Information gemäß dem auf der Anzeigeeinheit (104) angezeigten Inhalt steuert, und wobei die zweite Anzeigesteuerung eine Anzeigeform des Inhalts gemäß der auf der Anzeigeeinheit (104) angezeigten Posting-Information steuert;
**dadurch gekennzeichnet, dass**
das Ausführen der ersten Anzeigesteuerung und/oder der zweiten Anzeigesteuerung beinhaltet, dass in einem horizontalen Anzeigezustand, in dem nur eine Inhaltsanzeige ausgeführt wird, kein Kommunikationssymbol angezeigt wird, und das Kommunikationssymbol in einem vertikalen Anzeigezustand angezeigt wird, in dem zwei Bereiche der Inhaltsanzeige und die Posting-Informationsanzeige bereitgestellt werden, wobei das Kommunikationssymbol einen Kommunikationszustand des Empfangs der Posting-Information darstellt.

9. Computerprogramm mit Anweisungen, die, wenn sie durch eine Steuereinheit (102) einer Informationsverarbeitungsvorrichtung (1) ausgeführt werden, die eine Anzeigeeinheit (104) aufweist, das Verfahren nach Anspruch 8 ausführen.

## Revendications

1. Dispositif de traitement d'informations (1) comprenant :
une unité d'affichage (104) qui inclut une région d'affichage de contenu et une région d'affichage d'informations de publication disposées sur le même écran, l'unité d'affichage (104) étant adaptée pour afficher un contenu dans la région d'affichage de contenu et étant adaptée pour afficher dans la région d'affichage d'informations de publication des informations de publication publiées sur un réseau ; et
une unité de commande (102) adaptée pour exécuter au moins une parmi une première commande d'affichage et une deuxième commande d'affichage, la première commande d'affichage commandant une forme d'affichage des informations de publication en fonction du contenu affiché sur l'unité d'affichage (104), la deuxième commande d'affichage commandant une forme d'affichage du contenu en fonction des informations de publication affichées sur l'unité d'affichage (104),
**caractérisé en ce que**
l'unité de commande (102) est adaptée pour ne pas afficher une icône de communication, dans un état d'affichage horizontal dans lequel seul un affichage de contenu est effectué, et est adaptée pour afficher l'icône de communication, dans un état d'affichage vertical dans lequel il existe deux régions d'affichage de contenu et d'affichage d'informations de publication, l'icône de communication représentant un état de communication de réception des informations de publication.

2. Dispositif de traitement d'informations (1) selon la revendication 1, dans lequel l'unité de commande (102) est configurée pour déterminer, en tant que première commande d'affichage, au moins une parmi une luminance et une tonalité de couleur des informations de publication en fonction d'au moins une parmi une luminance et une tonalité de couleur du contenu.

3. Dispositif de traitement d'informations (1) selon la revendication 1 ou 2, dans lequel l'unité de commande (102) est configurée pour déterminer, en tant que première commande d'affichage, au moins une parmi une taille de caractères des informations de publication, une police de caractères des informations de publication, une vitesse de défilement au sein de la région d'affichage d'informations de publication, une quantité de défilement au sein de la région d'affichage d'informations de publication, une fréquence de mise à jour des informations de publication, une taille d'affichage de la région d'affichage d'informations de publication et une position d'affichage de la région d'affichage d'informations de publication au sein de l'écran de l'unité d'affichage (104) en fonction d'au moins un parmi une classe d'un observateur du contenu, un type du contenu, un rapport hauteur/largeur d'écran du contenu et une taille d'affichage de la région d'affichage de contenu.

4. Dispositif de traitement d'informations (1) selon l'une quelconque des revendications 1 à 3, dans lequel l'unité de commande (102) est configurée pour déterminer, en tant que première commande d'affichage, au moins une parmi une taille de caractère et une police de caractères des informations de publication en fonction d'au moins une parmi une taille de caractères et une police de caractères affichées dans le contenu.

5. Dispositif de traitement d'informations (1) selon l'une quelconque des revendications 1 à 4, dans lequel l'unité de commande (102) est configurée pour commander, en tant que deuxième commande d'affichage, une forme d'affichage de la région d'affichage de contenu en fonction d'un état de publication des informations de publication affichées dans la région d'affichage d'informations de publication.

6. Dispositif de traitement d'informations (1) selon l'une quelconque des revendications 1 à 4, dans lequel l'unité de commande (102) est configurée pour limiter, en tant que deuxième commande d'affichage, un affichage de contenu dans la région d'affichage de contenu en fonction d'une classe d'un publicateur des informations de publication affichées dans la région d'affichage d'informations de publication.

7. Système de publication comprenant :
le dispositif de traitement d'informations (1) selon l'une quelconque des revendications 1 à 5 ; et
un serveur de gestion d'informations de publication (3) adapté pour associer des informations de moment de publication aux informations de publication, et adapté pour gérer les informations de moment de publication et les informations de publication, les informations de moment de publication représentant un instant auquel les informations de publication ont été publiées à partir du dispositif de traitement d'informations (1).

8. Procédé de commande d'un affichage d'une unité d'affichage (104), l'unité d'affichage (104) incluant une région d'affichage de contenu et une région d'affichage d'informations de publication disposées sur le même écran, le procédé comprenant les étapes de :
affichage d'un contenu dans la région d'affichage de contenu ;
affichage dans la région d'affichage d'informations de publication d'informations de publication publiées sur un réseau; et
exécution d'au moins une parmi une première commande d'affichage et une deuxième commande d'affichage, la première commande d'affichage commandant une forme d'affichage des informations de publication en fonction du contenu affiché sur l'unité d'affichage (104), la deuxième commande d'affichage commandant une forme d'affichage du contenu en fonction des informations de publication affichées sur l'unité d'affichage (104),
**caractérisé en ce que**
l'exécution de l'au moins une parmi la première commande d'affichage et la deuxième commande d'affichage inclut le fait de ne pas afficher une icône de communication, dans un état d'affichage horizontal dans lequel seul un affichage de contenu est effectué, et d'afficher l'icône de communication, dans un état d'affichage vertical dans lequel il existe deux régions d'affichage de contenu et d'affichage d'informations de publication, l'icône de communication représentant un état de communication de réception des informations de publication.

9. Programme informatique comprenant des instructions qui, quand elles sont exécutées par une unité de commande (102) d'un dispositif de traitement d'informations (1) incluant une unité d'affichage (104), réalisent le procédé selon la revendication 8.
